Europäisches Patentamt

European Patent Office

Office européen des brevets

(19)

(11) Veröffentlichungsnummer: **0 234 383 B1**

(12) **EUROPÄISCHE PATENTSCHRIFT**

(45) Veröffentlichungstag der Patentschrift: **03.07.91**

(51) Int. Cl.⁵: **B65G 9/00**, E01B 25/26

(21) Anmeldenummer: **87101757.0**

(22) Anmeldetag: **09.02.87**

(54) **Hängefördersystem und angepasstes Betriebsmittel.**

(30) Priorität: **03.11.86 DE 3637287**
**19.02.86 DE 3605317**

(43) Veröffentlichungstag der Anmeldung:
**02.09.87 Patentblatt 87/36**

(45) Bekanntmachung des Hinweises auf die
Patenterteilung:
**03.07.91 Patentblatt 91/27**

(84) Benannte Vertragsstaaten:
**AT BE CH DE FR GB IT LI LU NL**

(56) Entgegenhaltungen:
**EP-A- 0 164 109     DE-B- 1 940 256**
**DE-B- 2 201 323     US-A- 2 920 581**
**US-A- 2 997 003     US-A- 3 422 950**

(73) Patentinhaber: **VEIT TRANSPO GMBH**
**Rudolf-Diesel-Strasse 3**
**W-8910 Landsberg/Lech(DE)**

(72) Erfinder: **Bergmeier, Werner, Dipl.-Ing**
**Meggendorfer Strasse 22**
**W-8000 München 50(DE)**
Erfinder: **Hafner, Josef, Dipl.-Ing**
**Garmischer Strasse 47**
**W-8038 Gröbenzell(DE)**
Erfinder: **Schönenberger, Rolf, Dipl.-Ing**
**Dipl.-Wirtsch.-Ing**
**Herzogstandstrasse 7**
**W-8910 Landsberg/Lesch(DE)**
Erfinder: **Fischer, Matthias, Dipl.-Ing**
**Auenstrasse 7a**
**W-8045 Ismaning(DE)**

(74) Vertreter: **Patentanwälte Grünecker, Kinkel-**
**dey, Stockmair & Partner**
**Maximilianstrasse 58**
**W-8000 München 22(DE)**

## Beschreibung

Die Erfindung bezieht sich auf ein Hängefördersystem der im Oberbegriff von Anspruch 1 erläuterten Art.

Derartige Hängefördersysteme sind für die innerbetriebliche Förderung von Gegenständen ausgelegt und in unterschiedlichen Ausführungen im Stand der Technik bekannt. Eines dieser Hängefördersysteme ist beispielsweise der DE-PS 22 01 323 zu entnehmen. Das bekannte Hängefördersystem ist mit Schienen ausgerüstet, die lediglich eine mittenabgehängte Position des Betriebsmittels erlauben, d.h. beide Laufrollen laufen unter gemeinsamer Aufnahme des Gewichtes der zu fördernden Gegenstände auf der jeweils zugeordneten Laufbahn ab. Eine solche Ausbildung eines Hängefördersystems hat jedoch den Nachteil, daß das Schienen-Betriebsmittel-System symmetrisch beidseitig der Schienenmittellinie den gleichen Platz benötigt. Weiterhin ist durch diese Anordnung der Radius von Schienenbögen relativ begrenzt. Dies wirkt sich insbesondere dort nachteilig aus, wo die bekannten Hängefördersysteme nachträglich in Betriebshallen eingebaut werden müssen und wo beispielsweise Pfeiler oder Streben umgangen oder Engstellen durchlaufen werden müssen. Ein entscheidender Nachteil des vorbekannten Hängefördersystems liegt auch darin, daß die Weichen für die Schienen mit Mittenabhängung relativ kompliziert und mit beweglichen Weichenzungen ausgebildet sein müssen. Bei der Vielzahl notwendiger Schaltvorgänge, bedingt durch das Öffnen und Schließen eines Fahrstreckenstranges verschleißen bzw. verschieben sich die beweglichen Teile sehr rasch und müssen ausgetauscht bzw. nachjustiert werden, um die Absturzgefahr des Betriebsmittels mitsamt den zu fördernden Gegenständen herabzusetzen.

Der Erfindung liegt somit die Aufgabe zugrunde, ein Hängefördersystem derart auszugestalten, daß ein vergrößerter Einsatzbereich bei einer einfachen und sicheren baulichen Ausgestaltung erreicht wird.

Die Aufgabe wird erfindungsgemäß durch die kennzeichnenden Merkmale des Hauptanspruches gelöst.

Durch die erfindungsgemäß im Schienenweg angeordnete Wechseleinrichtung ist es möglich, die Position des Betriebsmittels beliebig zu verändern, d.h. ein beispielsweise in der mittenabgehängten Position ankommendes Betriebsmittel in eine seitenabgehängte Position und zurück zu verdrehen oder ein rechtsabgehängt ankommendes Betriebsmittel linksabgehängt weiterzuführen. Dadurch kann der Radius der Schienenbögen entscheidend verringert werden, da das Betriebsmittel in der seitenabgehängten Position, je nachdem ob rechts oder links, rechte oder linke Kurven mit einem wesentlich geringeren Radius klemmungsfrei durchlaufen kann, als dies in der mittenabgehängten Position möglich wäre.

Wenn ein Hängefördersystem in beiden Laufrichtungen durchlaufen werden soll, ist die Ausgestaltung nach Anspruch 2 zweckmäßig.

Von besonderem Vorteil ist die Erfindung gemäß Anspruch 3 dort einsetzbar, wo sich der Schienenweg verzweigt. Durch die Anordnung der Wechseleinrichtung ist die Verwendung einer besonders vorteilhaften Weiche nach den Ansprüchen 4 bis 8 möglich. Die erfindungsgemäße Weiche enthält keinerlei umschlagende Weichenzungen und erfordert keine Unterbrechung des Schienenweges, so daß Ausbesserungsund Justierarbeiten nicht mehr notwendig sind und ein Absturz des Betriebsmittels nicht mehr möglich ist.

Durch Ausgestaltung nach Anspruch 9 ist es möglich, ohne Änderung des Schienenweges ein Abnehmen der Betriebsmittel von den Schienen zu ermöglichen.

Durch die Ausgestaltung nach Anspruch 10 kann die ursprüngliche Förderposition nach der Weiche wieder hergestellt werden.

Die Ansprüche 11 und 12 beschreiben Schienenwege für ein besonders vielfältig einsetzbares Hängefördersystem.

Die Anordnung der Zwangsführung nach Anspruch 13 ist besonders dort vorteilhaft, wo alle drei Schienentypen, d.h. Schienen für eine rechts- und eine linksabgehängte Position und Schienen für eine mittenabgehängte Position, vorhanden sind.

Anspruch 14 beschreibt ein erstes Ausführungsbeispiel einer Art der Zwangsführung, wobei die Laufrollen zwangsgeführt sind.

Die Ansprüche 15 bis 18 beschreiben ein erstes Ausführungsbeispiel einer Zwangsführung für die Laufrollen.

In den Ansprüchen 19 und 20 werden zwei alternative Ausführungsformen der Anschlagbahnen des ersten Ausführungsbeispiels der Wechseleinrichtung vorgestellt.

Die Ausgestaltung nach den Ansprüchen 21 und 22 erlaubt ein im wesentlichen reibungsarmes Drehen des Betriebs-mittels.

Durch die Ausgestaltung in den Ansprüchen 23 bis 25 wird erreicht, daß automatisch je nach Lage des ankommenden Betriebsmittels die richtige Betriebsstellung für ein Weiterleiten des Betriebsmittels eingestellt werden kann.

Die Ansprüche 26 bis 34 beschreiben ein zweites Ausführungsbeispiel für eine Wechseleinrichtung, bei der nicht die Laufrollen zwangsgeführt sind, sondern der Bügel selbst mit einem Stift in einer Führungsnut läuft. Diese Ausgestaltung hat den Vorteil einer wesentlich einfacheren Konstruktion.

Die Wechseleinrichtung mit einer Zwangsführung für den Bügel selbst kann in der Ausgestaltung nach den Ansprüchen 36 und 37 für einen Schienenweg mit drei verschiedenen Schienentypen eingesetzt werden.

In der Ausgestaltung nach den Ansprüchen 38 und 39 wird erreicht, daß das Betriebsmittel nur in der ersten oder der zweiten Betriebsstellung der Wechseleinrichtung verdreht wird, während es in der anderen Betriebsstellung in der ankommenden Position weiterlaufen kann. Diese Ausgestaltung ist besonders dort vorteilhaft, wo nur zwei Schienentypen im Schienenweg vorhanden sind.

Mit der Ausgestaltung nach Anspruch 40 kann auf baulich einfache Weise eine wesentlich größere Variationsbreite der Verdrehbewegungen erreicht werden, wobei insbesondere das Betriebsmittel über den gesamten Verdrehwinkel aus einer der seitenabgehängten Positionen in die andere seitenabgehängte Position verdreht werden kann.

Die Ansprüche 41 bis 43 beschreiben eine weitere Möglichkeit, das Betriebsmittel um den gesamten Verdrehwinkel, d.h. von einer seitenabgehängten Position auf die andere seitenabgehängte Position, zu verdrehen.

Die Ansprüche 44 bis 48 beschreiben eine besonders bevorzugte Ausgestaltung des Betriebsmittels für das jenige Ausführungsbeispiel der Wechseleinrichtung, das eine Zwangsführung für einen Führungsstift aufweist.

Dabei haben sich die Materialkombinationen gemäß den Ansprüchen 49 und 50 als besonders zweckmäßig erwiesen, da einerseits eine relativ geringe Reibung auftritt und andererseits auch die Schalt- und Laufgeräusche auf ein Minimum reduziert werden.

Die Ansprüche 51 bis 54 beschreiben besonders bevorzugte Möglichkeiten, eine der seitenabgehängten Positionen auch nach dem Verdrehen aufrecht zu erhalten.

Durch den Adapter nach Anspruch 55 wird erreicht, daß die Laufgeräusche und die Reibung auch beim Übergang von einer Wechseleinrichtung mit einer zylindrischen Lauffläche für die Laufrollen auf beispielsweise eine Schiene für eine mittenabgehängte Position, weitestmöglichst verringert werden.

Falls gewünscht, können nach Anspruch 56 eine oder mehrere Weichen vorgesehen werden, ohne daß am erfindungsgemäßen Hängefördersystem irgend etwas geändert werden muß.

Die Ansprüche 57 bis 59 beschreiben eine besonders bevorzugte konstruktive Ausgestaltung einer Drei-Wege-Weiche.

Um eine ungehinderte Verdrehbarkeit des Betriebsmittels sicherzustellen, haben sich die Ausbildungen der Führungen am Betriebsmittel für die zu fördernden Gegenstände nach den Ansprüchen 60 bis 63 bewährt.

In der Ausgestaltung nach Anspruch 64 kann das Betriebsmittel in einer der ersten Laufrichtung entgegengerichteten Laufrichtung den Weg durch die Wechseleinrichtung nach Anspruch 26 selbsttätig freischalten.

Die Ausgestaltung des Hängefördersystems nach Anspruch 65 ist besonders dort vorteilhaft, wo das Betriebsmittel, z.B. im Anschluß an eine Weiche, von einer vorher festgelegten Abhängungsposition in eine weitere vorher festgelegte Abhängungsposition verdreht werden muß.

Ein Betriebsmittel, das insbesondere für das erfindungsgemäße Hängefördersystem mit besonderen Vorteilen einsetzbar ist, beschreiben die Ansprüche 66 bis 70. Die Verwendung dieses Betriebsmittels ist jedoch nicht auf das beschriebene Hängefördersystem beschränkt, sondern erlaubt auch eine bessere Handhabung der zu transportierenden Gegenstände in konventionellen Hängefördersystemen. Durch die in einer Führung geführten Aufhängeelemente können die Gegenstände, beispielsweise zur Begutachtung seitlich ausgeschwenkt werden, ohne daß sich das Betriebsmittel von der Schiene löst bzw. auf dieser verklemmt.

Ausführungsbeispiele der Erfindung werden nachfolgend anhand der Zeichnungen näher erläutert. Es zeigen:

| Fig. 1 | einen Ausschnitt aus einem erfindungsgemäßen Hängefördersystem, |
| Fig. 2 | eine Vorderansicht eines Betriebsmittels, |
| Fig. 3 | den Schnitt III-III aus Fig.2, |
| Fig. 4 | die Draufsicht auf eine Weiche, |
| Fig. 5 | die Unteransicht einer Weiche, |
| Fig. 6 | den Schnitt VI-VI aus Fig.4, |
| Fig. 7 | das Aushängen des Betriebsmittels auf einer Seite der Weiche in drei Schritten, |
| Fig. 8 | das Aushängen des Betriebsmittels auf der anderen Seite der Weiche in drei Schritten, |
| Fig. 9 | die Seitenansicht einer Wechseleinrichtung, |
| Fig.10 | die Draufsicht auf eine Wechseleinrichtung im Schnitt, |
| Fig.11 | Schnitt XI-XI aus Fig.9, |
| Fig.12 | das Betätigen der Wechseleinrichtung in einer ersten Richtung durch ein Betriebsmittel in drei Schritten, |
| Fig.13 | das Betätigen der Wechseleinrichtung in einer zweiten Richtung durch ein Betriebsmittel in drei Schritten, |
| Fig.14 | ein allgemeiner Laufplan eines er- |

Fig.15 die Einzelheit A aus Fig.14,

Fig.16 die Einzelheit B aus Fig.14,

Fig.17 eine Drei-Wege-Weiche,

Fig.18 die Drei-Wege-Weiche aus Fig.17 in Abzweigstellung,

Fig. 19 eine perspektivische Draufsicht auf die Unterseite einer Weiche mit einem zweiten Ausführungsbeispiel einer Wechseleinrichtung,

Fig.20A,B eine Draufsicht auf die Wechseleinrichtung nach Fig.19 in den Betriebsstellungen I und II,

Fig. 21 den Schnitt XXI-XXI aus Fig.20B,

Fig. 22 den Schnitt XXII-XXII aus Fig.20B,

Fig. 23 eine Vorderansicht eines Betriebsmittels zur Verwendung mit einer Wechseleinrichtung der Fig.19 bis 22,

Fig. 24 den Schnitt XXIV-XXIV aus Fig.23,

Fig.25A,B ein weiteres Ausführungsbeispiel einer Wechseleinrichtung,

Fig.26A,B die Wechseleinrichtung aus Fig.25 mit einem Zusatzteil, und

Fig.27A,B Vorderansicht und geschnittene Seitenansicht eines Adapters.

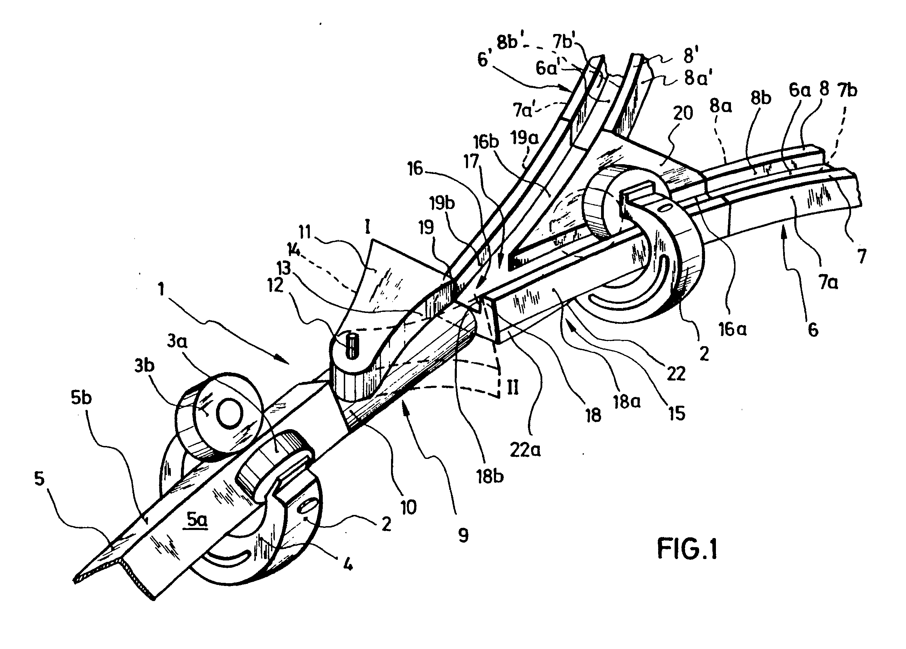

Aus Fig. 1 ist ein Teil eines Hängefördersystems mit einem Schienenweg 1 ersichtlich. Das Hängefördersystem enthält weiterhin auf dem Schienenweg 1 laufende Betriebsmittel 2, von denen zwei dargestellt sind. Die Betriebsmittel 2 sind identisch ausgebildet und weisen eine erste Laufrolle 3a und eine zweite Laufrolle 3b auf, die im wesentlichen ebenfalls identisch sind. Die erste und die zweite Laufrolle 3a und 3b sind über einen offenen Bügel 4 miteinander verbunden und zum Abrollen auf dem Schienenweg 1 ausgebildet.

Im dargestellten Ausschnitt enthält der Schienenweg 1 eine Schiene 5 mit einem dachförmigen Querschnitt, die eine rechte Laufbahn 5a zum Abrollen der ersten Laufrolle 3a und eine linke Laufbahn 5b zum Abrollen der zweiten Laufrolle 3b aufweist. Die beiden Laufbahnen 5a und 5b schließen zwischen sich einen Winkel von etwa 90° ein und sind um jeweils 45° zur Senkrechten geneigt. Die Achsen der Laufrollen 3a und 3b schließen ebenfalls einen Winkel von etwa 90° ein, wobei der Abstand der Laufrollen 3a und 3b an der offenen Seite des Bügels 4 kleiner ist als die Breite der Schiene 5. Der Bügel 4 erstreckt sich symmetrisch zur Schiene 5 unter dieser hindurch. Auf diese Weise läuft das Betriebsmittel 2 auf der Schiene 5 in einer mittenabgehängten Position M, in der jede der Laufrollen 3a und 3b etwa die Hälfte des Gewichts der am Bügel 4 hängenden Gegenstände aufnimmt.

Im Schienenweg 1 ist weiterhin eine andere Schienenart 6 vorgesehen, von der zwei dargestellt sind. Jede der Schienen 6, 6' weist eine Lauffläche 6a auf, die im wesentlichen horizontal verläuft. Die Lauffläche 6a, 6a' ist beidseitig von Stegen 7, 7' und 8, 8' begrenzt. Um die Vorratshaltung zu erleichtern, können die Schienen 6, 6' symmetrisch ausgebildet sein, wobei die Stege 7 und 8 den gleichen Querschnitt aufweisen.

Auf den Schienen 6, 6' laufen die Betriebsmittel 2 entweder in einer rechtsabgehängten Position R oder in einer linksabgehängten Position L, in der der Bügel 4 des Betriebsmittels 2 derart verdreht ist, daß entweder die erste Laufrolle 3a oder die zweite Laufrolle 3b auf der Laufbahn 6a, 6a' abrollt, wobei diese Laufrolle 3a bzw. 3b dann im wesentlichen das gesamte Gewicht des zu fördernden Gegenstandes aufnimmt und der Bügel 4 die Schienen 6, 6' von rechts bzw. von links umgreift. Um zu verhindern, daß sich die jeweils gewichtsaufnehmende Laufrolle verklemmt, ist die Außenseite des Steges 7, 7' als Anlagefläche 7a, 7a' ausgebildet, die mit einer nichtgezeichneten, aber weiter unten erläuterten Anlagefläche an der Innenseite des Bügels 4 zusammenwirkt. Weiterhin ist die in Richtung auf die Lauffläche 6a, 6a' weisende Seite des Steges 7, 7' mit einer weiteren Anlagefläche 7b, 7b' versehen, die mit der jeweiligen Laufrolle 3 zur Lagesicherung des Betriebsmittels 2 in der jeweiligen seitenabgehängten Position zusammenwirkt. Zusätzlich kann die Außenseite des Steges 8, 8' mit einer Lauffläche 8a, 8a' für die jeweils nicht gewichtsaufnehmende Laufrolle 3 versehen sein, während die in Richtung der Laufbahn 6a, 6a' weisende Seite des Steges 8, 8' als zweite Anlagefläche 8b, 8b' für die gewichtsaufnehmende Laufrolle 3 ausgebildet ist.

Es sei in diesem Zusammenhang darauf hingewiesen, daß die Definition der Begriffe "rechts" und "links" in Fig. 1 und in allen weiteren Figuren derart erfolgt, daß als rechte Seite diejenige Seite bezeichnet wird, die bei Betrachtung der jeweiligen Figur von der linken Seite des Blattes aus rechts liegt. In Fig. 1 ist somit die erste Laufrolle 3a die rechte Laufrolle, die auf die rechte Schiene 6 in rechtsabgehängter Position laufen wird, wobei der Bügel 4 des Betriebsmittels 2 entgegen dem Uhrzeigersinn verdreht wurde, so daß der Bügel 4 die Schiene 6 von rechts umgreift.

Um das Betriebsmittel 2 aus der mittenabgehängten Position M in die rechtsabgehängte Position R zu bringen, ist am Schienenweg 1 im Anschluß an die Schiene 5 eine Wechseleinrichtung 9 eingeschaltet. Die Wechseleinrichtung 9 weist einen Zylinder 10 und eine Zwangsführung 11 auf. Der Zylinder 10 ist, wie weiter unten noch näher erläutert, drehbar gelagert und schließt mit seiner Oberfläche an die Laufbahnen 5a und 5b der Schiene 5 in Höhe der Position der Laufrollen 3a und 3b in mittenabgehängter Position M an. Die Zwangsführung 11 ist um eine Achse 12 drehbar gelagert. Die Achse 12 ist am Scheitelpunkt des Zylinders 10 in der Nähe der Schiene 5 angeordnet. Die Zwangsführung 11 weist zwei als Anschlagbahnen ausgebildete, sich im wesentlichen senkrecht erstreckende Anschlagflächen 13 und 14 auf. Die Anschlagfläche 13 ist auf der rechten Seite der Zwangsführung 11 und die Anschlagfläche 14 auf deren linken Seite vorgesehen. Der Abstand zwischen den Anschlagflächen 13 und 14 an der Schiene 5 ist im wesentlichen gleich oder kleiner als der kleinste waagerechte Abstand zwischen den Laufrollen 3a und 3b in mittenabgehängter Position M und vergrößert sich in der von der Schiene 5 wegweisenden Richtung. Die Vergrößerung des Abstandes kann linear oder progressiv erfolgen, so daß die Zwangsführung 11 entweder die dargestellte kelchförmige oder eine dreieckige Querschnittsform erhält. Die Zwangsführung 11 kann jedoch auch als V-förmig um die Achse 12 gebogener Stab mit linienförmigen Anschlagbahnen ausgebildet sein.

Im Anschluß an die Wechseleinrichtung 9 ist eine Weiche 15 vorgesehen. Die Weiche 15 ist als Formteil ohne bewegliche Teile ausgebildet und enthält eine im wesentlichen horizontale Laufbahn 16, die mit dem Scheitelpunkt des Zylinders 10 fluchtet. Die Laufbahn 16 gabelt sich an einer Verzweigungsstelle 17 der Weiche 15 in eine rechte Laufbahn 16a und eine linke Laufbahn 16b. Die rechte Laufbahn 16a fluchtet mit der Laufbahn 6a der Schiene 6 und die linke Laufbahn 16b fluchtet mit der Laufbahn 6a' der Schiene 6'. Die Laufbahn 16 ist durch einen rechten Steg 18 und einen linken Steg 19 begrenzt, wobei die Stege 18 und 19 auch die äußere seitliche Begrenzung der jeweils zugeordneten Laufbahnen 16a und 16b bilden. An der Außenseite des Steges 18 ist eine Anlagefläche 18a und an der Außenseite des Steges 19 ist eine Anlagefläche 19a zur Anlage des Bügels 4 des Betriebsmittels 2 vorgesehen. Die Anlagefläche 18a fluchtet mit der Anlagefläche 7a der Schiene 6 und die Anlagefläche 19a fluchtet mit der Anlagefläche 7a' der Schiene 6'. Auf der Innenseite des Steges 18 ist eine weitere Anlagefläche 18b für die Laufrolle 3a vorgesehen, die mit der Anlagefläche 7b der Schiene 6 fluchtet. Auf der Innenseite des Steges 19 ist eine weitere Anlagefläche 19b für die Laufrolle 3b vorgesehen, die mit der Anlagefläche 7b' der Schiene 6' fluchtet. Von der Verzweigungsstelle 17 erstreckt sich ein dreieckiger Sockel 20 in richtung auf die Schienen 6 der die innere Begrenzung der Laufbahnen 16a und 16b bildet und fluchtend mit den Anlageflächen 8b bzw. 8b' der Schienen 6 ausgerichtet ist.

Auf der den Laufbahnen 16 bzw. 16a und 16b zugewandten Seite der Weiche 15 sind weiter unten noch näher erläuterte Führungen 21 (nicht dargestellt) und 22 für die jeweils nicht gewichttragende Laufrolle vorgesehen. Die in Fig. 1 sichtbare Führung 22 für die erste Laufrolle 3a in der linksabgehängten Position L weist eine erste Führungsfläche 22a auf, die fluchtend mit der Anlagefläche 8a' der Schiene 6' ausgerichtet ist.

Um das Betriebsmittel 2 über die Weiche 15 auf eine der Schienen 6 bzw. 6' zu leiten, ist die Zwangsführung 11 der Wechseleinrichtung 9 in zwei Betriebsstellungen I und II verschwenkbar. In der in Fig. 1 durchgezogen dargestellten Betriebsstellung I stellt die Anschlagfläche 13 im wesentlichen eine Verbindung dar, zwischen demjenigen Punkt, auf dem die Laufrolle 3a in mittenabgehängter Position von der Laufbahn 5a auf den Zylinder 10 übertritt und der Anlagefläche 19b der Weiche 15. Dabei ragt, wie ersichtlich, die Anschlagfläche 14 in die Verlängerung der Laufrichtung der linken Laufrolle 3b hinein. Ein in mittenabgehängter Position M in der ersten Laufrichtung ankommendes Betriebsmittel 2 wird somit mit seiner Laufrolle 3b an die Anschlagfläche 14 anstoßen. Bei fortschreitender Vorwärtsbewegung wird sich das Betriebsmittel 2 um eine imaginäre, in Laufrichtung liegende Drehachse immer so weit drehen, wie es die an die Anschlagfläche 13 anschlagende Laufrolle 3a zuläßt. Das Betriebsmittel 2 wird sich somit so weit gegen den Uhrzeigersinn drehen, bis die rechte Laufrolle 3a auf die Laufbahn 16 übertritt. An dieser Stelle kommt die Anlagefläche 18a mit dem Bügel 4 und die Anlagefläche 18b mit der Laufrolle 3a in Eingriff, so daß das Betriebsmittel 2 in rechtsabgehängter Position über die Verzweigungsstelle 17 und die Lauffläche 16a auf die Schiene 6 mit der Lauffläche 6a gelangen kann.

Soll das Betriebsmittel 2 in eine linksabgehängte Position überführt werden, so wird die Zwangsführung 11 in ihre gestrichelt gezeichnete Betriebsstellung II gebracht. Die Betätigung der Zwangsführung kann entweder durch Anstoßen mit der Hand oder durch ein Hebelgestänge oder durch andere gängige Schalt elemente erfolgen. In der Betriebsstellung II wird die Anschlagfläche 14 mit der Anlagefläche 18a der Weiche 15 ausgerichtet, wodurch die Anschlagfläche 13 in die Bahn der Laufrolle 3a ragt. Die Laufrolle 3a schlägt somit gegen die Anschlagfläche 13, worauf das Betriebsmittel 2 so weit verdreht wird, wie es die an die Anschlagfläche 14 anschlagende Laufrolle 3b zuläßt. Der Bügel 4 wird sich somit so weit im Uhrzeigersinn verdrehen, bis die linke Laufrolle 3b in die Laufbahn 16 einläuft. Beim Einlaufen in die Laufbahn 16 kommt der Bügel 4 in Anlage zur Anlagefläche 19a, wobei er die Laufbahn 16 von links umgreift. Gleichzeitig kommt die Anlagefläche 19b mit der Laufrolle 3b in Anlage, so daß das Betriebsmittel 2 in linksabgehängter Position L über die Verzweigungsstelle 17 in die Laufbahn 16b einläuft und von dort in die Laufbahn 6a' der Schiene 6' gelangt. Gleichzeitig läuft die rechte Laufrolle 3a über die Führungsfläche 22a auf die Anlagefläche 8a' der Schiene 6'.

Nach diesem allgemeinen Überblick sollen nachfolgend die verwendeten Einzelteile eingehender erläutert werden.

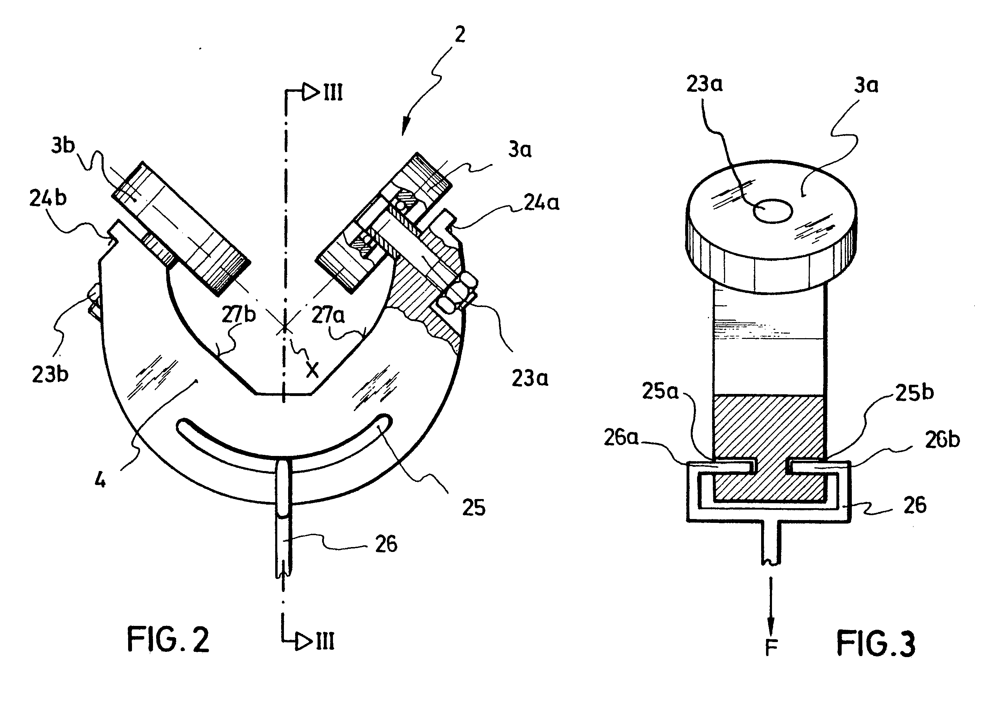

In den Fig. 2 und 3 ist das Betriebsmittel 2 näher ersichtlich. Der Bügel 4 ist im wesentlichen symmetrisch um eine durch den halben Abstand zwischen den beiden Laufrollen 3a und 3b laufende Achse ausgebildet. Am Kreuzungspunkt dieser Achse mit den Mittellinien durch die Laufrollen 3a und 3b durchstößt die imaginäre Drehachse bei X die Zeichnungsebene. Die Laufrollen 3a und 3b sind um Achsen 23a und 23b, zweckmäßigerweise mit den dargestellten Rollenlagern, drehbar am Bügel 4 gelagert. Dabei sollte darauf geachtet werden, daß die Achsen 23a und 23b nicht über die Laufrollen 3a und 3b an der dem Bügel 4 abgewandten Seite hervorstehen. Wie bereits erwähnt, sind die Laufrollen 3a und 3b um 90° zueinander geneigt angeordnet. Ein anderer Winkel ist, je nach dem verwendeten Profil für die Mittenabhängung möglich. In der Nähe jeder der Laufrollen 3a und 3b sind im Bügel 4 Steuerflächen 24a und 24b vorgesehen, deren Zweck weiter unten noch näher erläutert wird. An der Innenseite des Bügels 4 befinden sich die bereits erwähnten Anlageflächen 27a und 27b für die Anlage an den Anlageflächen 18a bzw. 19a.

Im Bügel 4 ist weiterhin symmetrisch um die Symmetrieachse eine Führung 25 vorgesehen. Die Führung 25 ist zweckmäßigerweise als beidseitig in den Bügel 4 eingearbeitete Schlitze 25a und 25b ausgebildet, die sich über einen Kreisbogen erstrecken, dessen Achse mit der Drehachse X zusammenfällt. In die Schlitze 25a und 25b greifen die beiden Enden 26a bzw. 26b eines C-förmigen Bügels 26 ein, der Teil einer nicht näher dargestellten Aufhängeeinrichtung für die zu fördernden Gegenstände ist. Die Enden 26a und 26b sind gleitend innerhalb der Schlitze 25a und 25b geführt. Die Schlitze 25a und 25b müssen sich zumindest über denjenigen Bereich erstrecken, der dem notwendigen Drehwinkel des Betriebsmittels 2 aus der mittenabgehängten Position M in die rechtsabgehängte Position R und in die linksabgehängte Position L entspricht. Im dargestellten Ausführungsbeispiel beträgt der notwendige Drehwinkel in beiden Richtungen jeweils 45°, so daß sich die Schlitze 25a bzw. 25b beidseitig der Symmetrieachse des Bügels 4 um jeweils 45°, d.h. insgesamt mindestens über 90° erstrecken müssen. Dadurch wird sichergestellt, daß sich das Betriebsmittel 2 über den zu fördernden Gegenständen ungehindert verdrehen kann, ohne daß die zu fördernden Gegenstände angehoben oder abgesenkt werden müssen. Eine derartige Führung für die Aufhängeeinrichtung der zu fördernden Gegenstände ist jedoch auch dort vorteilhaft, wo das Betriebsmittel 2 nicht verdreht werden muß. Durch diese Führung ist es möglich, die zu fördernden Gegenstände beispielsweise zu Inspektionszwecken aus ihrer senkrecht hängenden Lage zu verschwenken, ohne daß irgendeine seitliche Kraft auf das Betriebsmittel ausgeübt wird. Dadurch wird weitgehend vermieden, daß sich das Betriebsmittel auf der Schiene verklemmen kann oder gar von ihr löst.

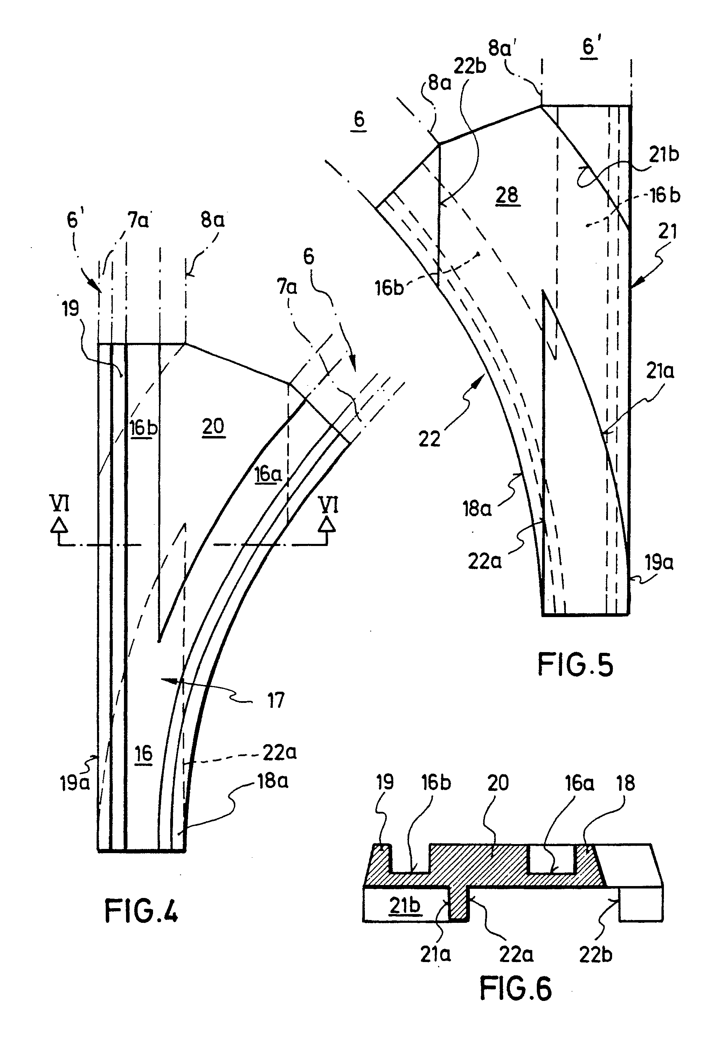

In den Fig.4 bis 6 ist die Weiche 15 näher dargestellt. Die Fig.4 zeigt eine Draufsicht auf die Weiche 15, wie sie im wesentlichen bereits aus Fig.1 ersichtlich ist. Der einzige Unterschied dieser Weiche gegenüber der in Fig.1 dargestellten besteht darin, daß die Weiche 15 nach Fig.4 keine Gabelung sondern eine Abzweigung zeigt, d.h. die weiterführende, strichpunktiert angedeutete Schiene 6' ist eine Gerade, während die Schiene 6 nach wie vor ein Bogen ist. In jeder Ausführungsart ist die Weiche 15 als einstückiges Formteil ausgebildet, wobei keinerlei bewegliche Teile erforderlich sind. Wie ebenfalls bereits in Fig.1 dargestellt, verlaufen auch hier die äußeren und inneren Anlageflächen 18a, 18b bzw. 19a, 19b über den Bereich der Laufbahn 16 und den jeweiligen Bereichen der Laufbahn 16a bzw. 16b und setzen sich in den Schienen 6 bzw. 6' fort.

Auf der in Fig.5 gezeichneten Unterseite sind die Führungen 21 und 22 für die in der seitenabgehängten Position R bzw. L jeweils nicht gewichtstragenden Laufrollen 3b bzw. 3a ersichtlich. Die Führungen 21 und 22 bestehen aus jeweils leistenförmigen Ausnehmungen, die parallel zur zugeordneten Laufbahn 16a bzw. 16b verlaufen und zwei Führungsflächen 21a und 21b bzw. 22a und 22b aufweisen. Die Führung 21 läuft parallel zur Laufbahn 16a, wobei die Führungsfläche 21a von der Laufbahn 16a weggewandt und die Führungsfläche 21b der Laufbahn 16a zugewandt ist. Dabei weist insbesondere die Führungsfläche 21a zur Anschlagfläche 18a einen Abstand auf, der derart bemessen ist, daß in der rechtsabgehängten Position R bei im Eingriff stehenden Anlageflächen 18a und 27a die nicht gewichtstragende Laufrolle 3b auf der Führungsfläche 21a abrollt. Der Abstand zwischen der Führungsfläche 21a und der Führungsfläche 21b ist leicht größer als der Durchmesser der Laufrolle 3 b.

Die Führungsfläche 22a weist einen derartigen Abstand zur Anlagefläche 19 auf, daß in linksabgehängter Position L die Laufrolle 3a auf der Führungsfläche 22a abrollt. Der Abstand zwischen der Führungsfläche 22a und der Führungsfläche 22b ist ebenfalls leicht größer als der Durchmesser der Laufrolle 3a. Wie Fig.5 zeigt, überkreuzen sich die Führungen 21 und 22 in einem Bereich 28, wobei die Führungsflächen 21a und 22a enden, um ein ungehindertes Durchlaufen der jeweils nicht gewichtstragenden Laufrolle in die beiden Richtungen zu ermöglichen. Nach dem Kreuzungsbereich 28 werden die jeweiligen Führungsflächen 21a bzw. 22a als Anlageflächen 8a bzw. 8a' an den Schienen 6 bzw. 6'weitergeführt. Auf diese Weise läuft in der rechtsabgehängten Position die Laufrolle 3a über die Laufbahn 16 in die Laufbahn 16a, während die Laufrolle 3b auf der Führungsfläche 21a ab- und unter der Weiche 15 hindurchläuft, um nach der Weiche 15 wieder in Anlage mit der Anlagefläche 8a zu kommen. In linksabgehängter Position läuft die linke Laufrolle 3b von der Laufbahn 16 auf die Laufbahn 16b, während die rechte Laufrolle 3a auf der Führungsfläche 22a abrollt und unter der Weiche 15 hindurchgeführt wird, um hinter der Weiche 15 in Anlage mit der Anlagefläche 8a' der Schiene 6' zu gelangen.

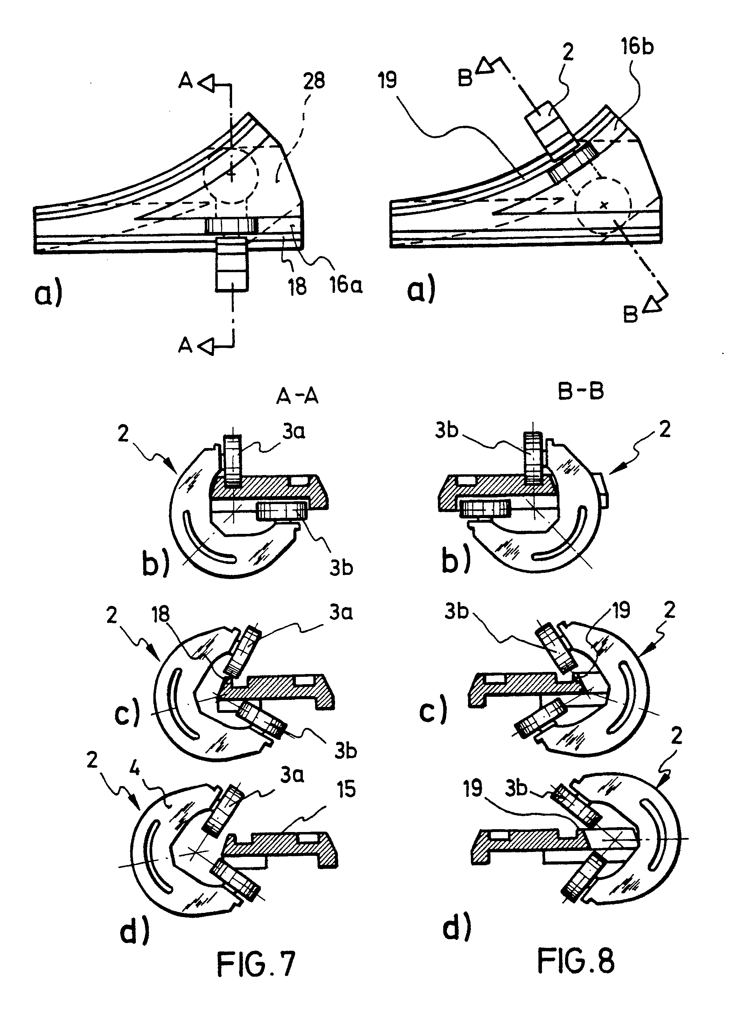

Im Kreuzungsbereich 28 zwischen dem Ende der Führungsflächen 21a und 22a und dem Beginn der Anlageflächen 8a und 8a' ist die jeweils nicht gewichtsaufnehmende Laufrolle 3a bzw. 3b nach außen seitlich nicht unterstützt, so daß an dieser Stelle das Betriebsmittel 2 von der Weiche 15 abgenommen werden kann, wie dies in den Fig.7 und 8 gezeigt ist. In den oberen Teilfiguren a) ist eine spiegelbildlich zu den Figuren 4 bis 6 ausgebildete Weiche 15 ersichtlich. Das Betriebsmittel 2 befindet sich in Höhe des Kreuzungsbereichs 28 auf der rechten Laufbahn 16a in rechtsabgehängter Position R, wie dies auch im Schnitt der Teilfigur b) zu sehen ist. Zum Abnehmen des Betriebsmittels wird dieses, wie die Teilfigur c) zeigt, aus der rechtsabgehängten Position R noch weiter verdreht, bis die Laufrolle 6a über den Steg 18 gehoben werden kann. In dieser Position kann das Betriebsmittel 2, wie die Teilfigur d) zeigt, von der Weiche 15 abgezogen werden.

Analog wird in Fig.8 verfahren, wenn das Betriebsmittel 2 aus der linksabgehängten Position in der linken Laufbahn 16b abgezogen werden soll, wie ebenfalls die Teilfiguren b )bis d )zeigen.

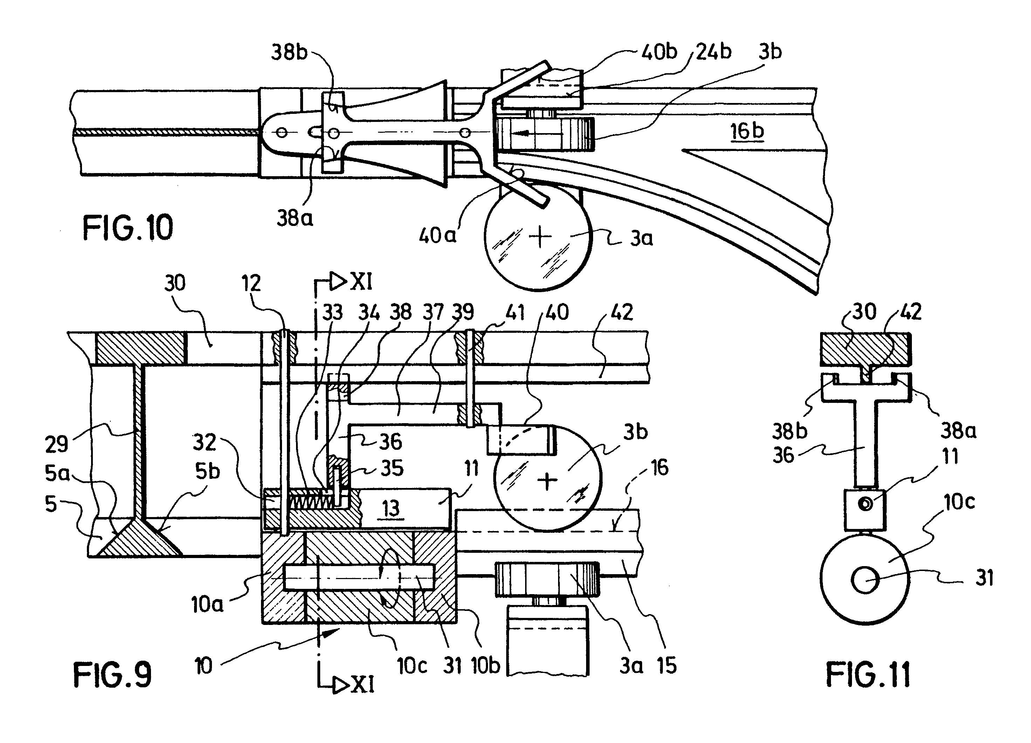

Die Fig.9 bis 11 zeigen ein modifiziertes Ausführungsbeispiel der Wechseleinrichtung 9. Fig.9 zeigt eine Seitenansicht mit dem Zylinder 10, der Zwangsführung 11 mit der Anschlagfläche 13 und der Achse 12.Links befindet sich eine Schiene 5 mit einem dreieckigen Profil mit dachförmig aneinanderstoßenden Laufbahnen 5a und 5b, die in dem eingezeichneten Querschnitt zu sehen sind. Die Schiene 5 ist, wie dies bei Profilschienen häufig zu finden ist, über einen durchgehenden Verbindungssteg bzw. Verbindungsstreben 29 mit einem Obergurt 30 versehen. Im Obergurt 30 ist das obere Ende der Achse 12 gelagert. Das untere Ende der Achse 12 ist in einem Ende 10a des Zylinders 10 gelagert, das gegenüber der Schiene 5 feststeht. Das andere Ende 10b des Zylinders 10 steht gegenüber der Weiche 15 fest. In den Enden 10a und 10b des Zylinders 10 ist eine Achse 31 gelagert, auf der sich ein Mittelstück 10c des Zylinders 10 dreht.

Die Zwangsführung 11 weist eine in der Längsmittellinie liegende Ausnehmung 32 auf, in der eine Druckfeder 33 abgestützt ist. Die Ausnehmung 32 steht über ein Langloch 34 mit der Oberseite der Zwangsführung 11 in Verbindung. Durch dieses Langloch 34 ragt ein Stift 35, der an der Feder 33 anliegt und diese bei seiner Bewegung im Langloch 34 zusammendrückt bzw. entlastet. Mit seinem anderen Ende ist der Stift 35 mit einer im wesentlichen senkrechten Strebe 36 eines Betätigungshebels 37 verbunden. Der Betätigungshebel 37 weist in Verlängerung der senkrechten Strebe 36 eine erste, in Richtung des Obergurtes ragende Gabel 38, eine von der senkrechten Strebe 36 wegweisende, im wesentlichen waagerecht verlaufende Strebe 39 mit einer zweiten, um mindestens den Abstand zwischen dem unteren Ende der Steuerfläche 24 am Betriebsmittel 2 und dem oberen Ende der zugeordneten Laufrolle 3 gegenüber der waagerechten Strebe 39 nach unten vorstehenden, waagerechten Gabel 40, die sich über den Bereich des Zylinders 10 hinaus bis in den Bereich oberhalb der Laufbahn 16 erstreckt. In der waagerechten Strebe 39 ist das untere Ende einer zweiten, zur Achse 12 parallelen Achse 41 gelagert, deren oberes Ende vom Obergurt 30 derart aufgenommen wird, daß sich der Betätigungshebel 37 um die Achse 41 drehen kann. Die nach oben weisende Gabel 38 weist an der Innenseite der Gabelzinken eine rechte und eine linke Anschlagfläche 38a und 38b auf, die beim Verdrehen des Betätigungshebels 37 an jeweils einer Seite einer Anschlagleiste 42 am Obergurt 30 anschlagen und auf diese Weise die Verdrehung des Betätigungshebels 37 um die Achse 41 begrenzen. Die Anschlagflächen 38a bzw. 38b sind zweckmäßigerweise etwas gegenüber der Laufrichtung geneigt, so daß sie mit ihrer gesamten Fläche an der Anschlagleiste 42 anliegen können. Die waagerecht in Laufrichtung weisende Gabel 40 enthält eine nach innen weisende, rechte Steuerfläche 40a und eine nach innen weisende,linke Steuerfläche 40b. Die rechte Steuerfläche 40a ragt in der Betriebsstellung II der Wechseleinrichtung 9 derart in die Bahn des Bügels 4 in der rechtsabgehängten Position, daß sie mit der rechten Steuerfläche 24a des Bügels 4 in Eingriff treten kann. Die linke Steuerfläche 40b der Gabel 40 ragt in der Betriebsstellung I derart in die Bahn des Bügels 4 in der linksabgehängten Position, daß sie mit der linken Steuerfläche 24b des Bügels 4 in Eingriff treten kann, so daß die Gabel 40 und somit der gesamte Betätigungshebel 37 aus der gezeichneten Position nach rechts oder links bzw. aus einer rechten Position nach links und aus einer linken Position nach rechts so weit ausgelenkt wird, bis die entsprechenden Anschlagflächen 38a bzw. 38b an der Anschlagleiste 42 anschlagen. Dadurch wird jedoch über den Stift 35 auch die Zwangsführung 11 in entweder die Betriebsstellung I oder die Betriebsstellung II verschwenkt, so daß ein seitlich abgehängtes Betriebsmittel 2 beim Durchlauf in der zweiten Laufrichtung, d.h. von rechts nach links in der Figur, sich immer selbsttätig die Durchfahrt auf die Schiene 5 freischalten kann.

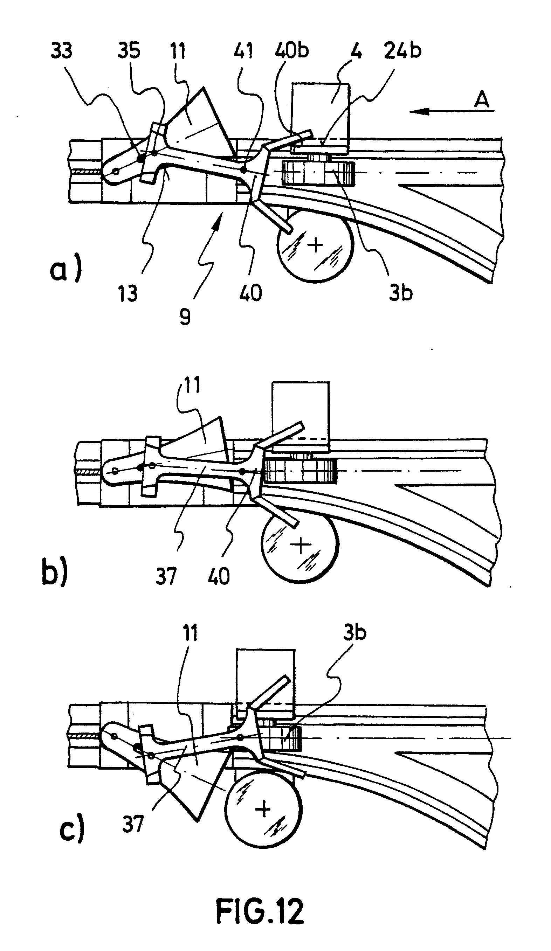

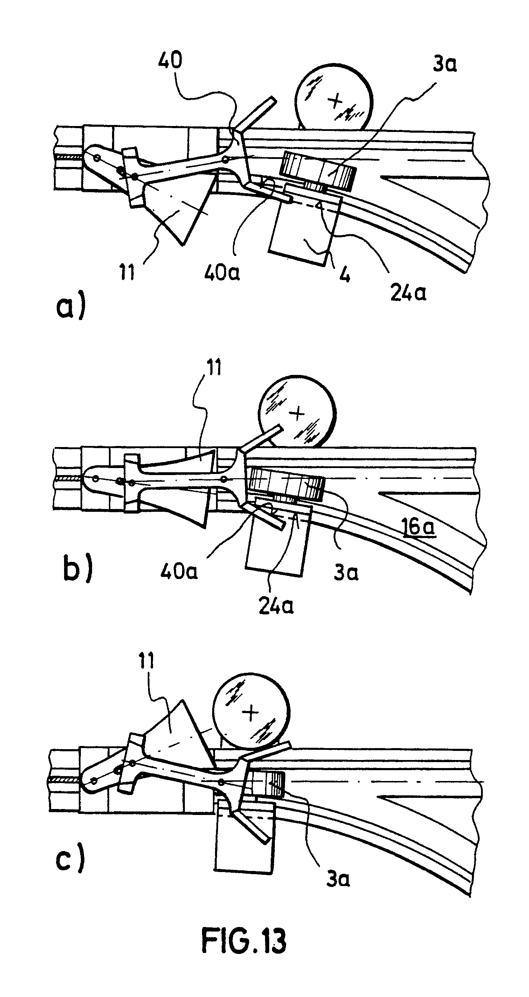

Wie dies im einzelnen abläuft, wird anhand der Fig.12 und 13 erläutert. In der Teilfigur a)der Fig.12 kommt in Richtung des Pfeiles A ein Betriebsmittel 2 in linksabgehängter Position in den Bereich der Gabel 40 oberhalb der Laufbahn 16. Die Zwangsführung 11 der Wechseleinrichtung 9 steht jedoch in der Betriebsstellung I, d.h. in derjenigen Betriebsstellung, in der eine Durchfahrt für rechtsabgehängte Betriebsmittel 2 freigegeben ist. Das linksabgehängt ankommende Betriebsmittel 2 würde somit mit seinem Bügel 4 gegen die Rückseite der Zwangsführung 11 prallen und verklemmen. Vor dem Einlauf in die Zwangsführung 11 kommt jedoch die Steuerfläche 24b am Bügel 4 mit der Steuerfläche 40b an der Gabel 40 in Eingriff, wodurch, wie in der Teilfigur b)ersichtlich, die Gabel 40 um die Achse 41 nach links und dadurch der Stift 35 unter Mitnahme der Zwangsführung 11 nach rechts verdreht wird. Dabei gleitet der Stift 35 im Langloch 34 und drückt die Feder 33 zusammen. Nach Überschreiten des Totpunktes entspannt sich die Feder 33 wieder und drückt den Stift 35 wieder in seine Ausgangsposition im Langloch 34, wodurch jedoch,wie dies in der Teilfigur c)ersichtlich ist, die Verschwenkbewegung der Zwangsführung 11 in ihre Betriebsstellung II, in der die Anschlagfläche 38b der Gabel 38 an der Anschlagleiste 42 anliegt, vollendet wird. Dadurch kommt jedoch die Steuerfläche 24b des Bügels 4 von der Steuerfläche 40b der Gabel 40 frei, so daß das Betriebsmittel 2 unter der waagerechten Strebe 39 des Betätigungshebels 37 hindurch auf den Zylinder 10 auflaufen kann. Dabei schlägt die Laufrolle 3b an die Anschlagfläche 14 an und wird von dieser aus ihrer linksabgehängten Position nach links geleitet, während die rechte Laufrolle 3a aus ihrer waagerechten Position nach oben kommt, bis sie an die Anschlagfläche 13 anschlägt, so daß das Betriebsmittel 2 auf diese Weise in eine mittenabgehängte Position M überführt werden kann.

Die gleichen Vorgänge laufen ab, wenn ein rechtsabgehängtes Betriebsmittel 2 in eine Wechseleinrichtung 9 einläuft, die in ihrer Betriebsstellung II steht. Dabei kommt die Steuerfläche 40a der Gabel 40 mit der Steuerfläche 24a des Bügels 24 in Eingriff, wodurch die Zwangsführung 11 wieder in ihre Betriebsstellung I zurückgeschwenkt wird.

Das erfindungsgemäße Hängefördersystem ist somit als Bausatz konzipiert, wobei sich mit einer äußerst geringen Anzahl von Einzelbausteinen in fast beliebiger Weise ein exakt auf die speziellen Anforderungen zugeschnittenes Hängefördersystem zusammenstellen läßt. Es können z.B. sehr enge Bogenradien vorgesehen sein, die in der entsprechenden Seitenabhängung durchführen werden. Es können sowohl geradlinige Strecken für eine Mittenabhängung als auch geradlinige Strecken für beide Seitenabhängungen vorgesehen sein, wo dies erforderlich ist.

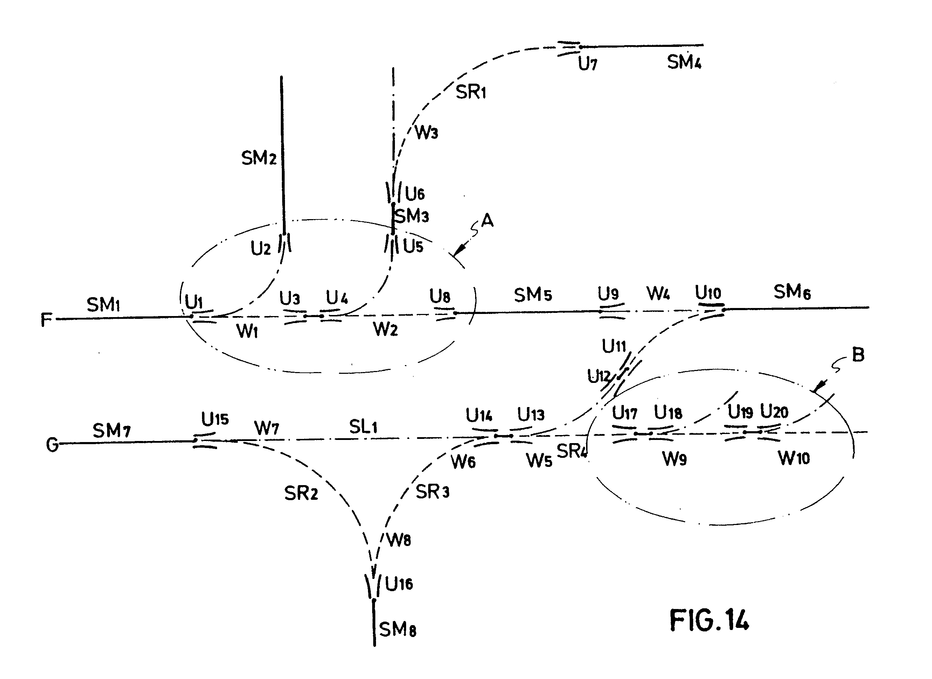

Ein Beispiel eines möglichen Hängefördersystems ist in Fig. 14 ersichtlich. In dieser schematischen Darstellung bezeichnen die durchgezogenen Linien Schienen für eine mittenabgehängte Position M, die gestrichelten Linien rechtsabgehängte Positionen R und die strichpunktierten Linien linksabgehängte Positionen L. Der obere Ast F beginnt zunächst mit einer Schiene für mittenabgehängte Position $SM_1$, die den in den Figuren dargestellten dach-bzw. dreikantprofilförmigen Querschnitt aufweisen kann. Am Ende der Schiene $SM_1$ ist eine erste Wechseleinrichtung $U_1$ angeordnet, die vom Typ der in den Fig. 9 bis 11 dargestellten Wechseleinrichtungen ist, d.h. die Wechseleinrichtung ist schaltbar und weist einen Betätigungshebel auf. Durch die Wechseleinrichtung $U_1$ wird das Betriebsmittel wahlweise in rechts- bzw. linksabgehängter Position in die Weiche $W_1$ eingeleitet. Läuft das Betriebsmittel in linksabgehängter Position durch die Weiche, so trifft es auf eine zweite Wechseleinrichtung $U_2$, die, in Laufrichtung gesehen, in umgekehrter Richtung in den Schienenweg eingeschaltet ist. Die Wechseleinrichtung $U_2$ befindet sich in einer Stellung, in der das linksabgehängt ankommende Betriebsmittel in die mittenabgehängte Position auf die Schiene $SM_2$ überführt wird. Die Stellung der Wechseleinrichtung $U_2$ kann fixiert sein, da bei Vorwärts- und Rücklauf des Betriebsmittels durch $U_2$ immer nur zwischen den zwei Abhängungen verdreht werden muß.

Läuft das Betriebsmittel durch $W_1$ in der rechtsabgehängten Position, so trifft es auf eine Kombination zweier Wechseleinrichtungen $U_3$ und $U_4$. Die Wechseleinrichtung $U_3$ ist analog $U_2$ im Schienenweg angeordnet und in einer Stellung festgelegt, in der das rechtsabgehängt ankommende Betriebsmittel in seine mittenabgehängte Position verdreht wird. In mittenabgehängter Position läuft dann das Betriebsmittel in die analog $U_1$ ausgebildete Wechseleinrichtung $U_4$ ein, die in beide Betriebsstellungen I und II verstellbar ist und den Betätigungshebel aufweist. In der Betriebsstellung II der Wechseleinrichtung $U_4$ wird das Betriebsmit-

tel in linksabgehängter Position in eine Weiche $W_2$ eingeleitet. Am Ausgang der Weiche $W_2$ ist eine Wechseleinrichtung $U_5$ vorgesehen, die in gleicher Weise wie $U_2$, d.h. feststehend und ohne Betätigungshebel, angeordnet ist und eine Stellung aufweist, in der das linksabgehängte Betriebsmittel in eine mittenabgehängte Position überführt und auf die Schiene $SM_3$ geleitet wird. Die Schiene $SM_3$ führt zu einer Wechseleinrichtung $U_6$, die in gleicher Weise wie die Wechseleinrichtung $U_1$ in eine Weiche $W_3$ überleitet. Der linke Zweig der Weiche $W_3$ kann dann ohne Zwischenschaltung einer Wechseleinrichtung in einer Schiene $SR_1$ für Rechtsabhängung weitergeführt werden. Die Schiene $SR_1$ endet in einer weiteren Wechseleinrichtung $U_7$, die in einer Betriebsstellung festgelegt ist, in der das rechtsabgehängt ankommende Betriebsmittel in der mittenabgehängten Position auf der Schiene $SM_4$ weitergeführt werden kann.

Steht die Wechseleinrichtung $U_4$ in der Betriebsstellung I, so wird das Betriebsmittel in rechtsabgehängter Position durch die Weiche $W_2$ geführt. Am Ausgang der Weiche $W_2$ ist eine Wechseleinrichtung $U_8$ analog $U_7$ angeordnet und in einer Stellung festgelegt, in der das rechtsabhängt ankommende Betriebsmittel in die mittenabgehängte Position überführt und auf die Schiene $SM_5$ übergeleitet wird. Am Ende der Schiene $SM_5$ befindet sich eine Wechseleinrichtung $U_9$, die in einer Stellung festgelegt wurde, in der das Betriebsmittel aus der mittenabgehängten Position in die linksabgehängte Position überführt und in dieser Position in eine Weiche $W_4$ eingeführt wird. Am Ende der Weiche ist eine umschaltbare Wechseleinrichtung $U_{10}$ vorgesehen, die das Betriebsmittel auf die Schiene $SM_6$ für mittenabgehängte Position überführt. Beim Rücklauf des Betriebsmittels aus der Schiene $SM_6$ durch die in ihrer zweiten Betriebsstellung stehende Wechseleinrichtung $U_{10}$ wird das Betriebsmittel in die rechtsabgehängte Position überführt und in dieser Stellung durch $W_4$ geleitet. Am Ausgang der Weiche $W_4$ befindet sich eine weitere Kombination von Wechseleinrichtungen $U_{11}$ und $U_{12}$, die um $180°$ zueinander versetzt angeordnet und beide in einer derartigen Stellung festgelegt sind, daß durch die Wechseleinrichtung $U_{11}$ das rechtsabgehängt ankommende Betriebsmittel in seine mittenabgehängte Position und durch $U_{12}$ weiter in seine linksabgehängte Position verdreht wird. In der linksabgehängten Position läuft das Betriebsmittel dann in eine Weiche $W_5$ im zweiten Ast G des Hängefördersystems ein. Nach Durchlauf der Weiche $W_5$ trifft das Betriebsmittel auf eine Kombination zweier Wechseleinrichtungen $U_{13}$ und $U_{14}$, die wiederum spiegelbildlich zueinander angeordnet und beide in die jeweils zwei Betriebsstellungen verstellbar und mit den Betätigungshebeln ausgerüstet sind. Das linksabgehängt

in die Weiche $W_5$ einlaufende Betriebsmittel wird durch $U_{13}$ in seine mittenabgehängte Position und durch $U_{14}$ beispielsweise in einer linksabgehängten Position in eine Weiche $W_6$ eingeleitet. Am Ausgang der Weiche $W_6$ schließt sich die Schiene $SL_1$ an, auf der das Betriebsmittel in linksabgehängter Position in eine Weiche $W_7$ einläuft. Am Ausgang der Weiche $W_7$ ist eine Wechseleinrichtung $U_{15}$ vorgesehen, die analog $U_1$ ausgebildet und angeordnet ist. Durch $U_{15}$ wird das linksabgehängt ankommende Betriebsmittel in die Schiene $SM_7$ für Mittenabhängung überführt. Beim Vorwärtslauf auf dem Ast G kann die Wechseleinrichtung $U_{15}$ beispielsweise wieder in ihre erste Betriebsstellung überführt werden, so daß das aus der Schiene $SM_7$ in mittenabgehängter Position ankommende Betriebsmittel in die rechtsabgehängte Position überführt und durch $W_7$ auf die Schiene $SR_2$ geleitet wird. Am Ende der Schiene $SR_2$ läuft das Betriebsmitte in die Weiche $W_8$ ein und wird durch die sich anschließende Wechseleinrichtung $U_{16}$ wieder in die mittenabgehängte Position überführt und auf die Schiene $SM_8$ geleitet. Beim Lauf des Betriebsmittels von der Schiene $SM_8$ durch die Wechseleinrichtung $U_{16}$ kann diese in ihre andere Betriebsstellung verstellt werden, so daß das Betriebsmittel über $W_8$ in definitionsgemäß wiederum rechtsabgehängter Position auf die Schiene $SR_3$ geleitet wird. Am Ende der Schiene $SR_3$ läuft das Betriebsmittel zurück in die Weiche $W_6$. Dann können die Wechseleinrichtungen $U_{14}$ und $U_{13}$ in ihre jeweils andere Betriebsstellung überführt werden, so daß das rechtsabgehängt durch die Weiche $W_6$ laufende Betriebsmittel durch $U_{14}$ in die mittenabgehängte Position und durch $U_{13}$ wiederum in die rechtsabgehängte Position zurückverdreht und auf eine Schiene $SR_4$ in rechtsabgehängter Position in eine Kombination von Wechseleinrichtungen $U_{17}/U_{18}$ einläuft, die analog $U_3/U_4$ ausgebildet und schaltbar sind. Nach dem Verlassen von $U_{18}$ in rechtsabgehängter Position läuft das Betriebsmittel durch eine Weiche $W_9$ in eine zweite Kombination von Wechseleinrichtungen $U_{19}/U_{20}$, die analog $U_3/U_4$ bzw. $U_{17}/U_{18}$ ausgebildet sind. Am Ausgang von $U_{20}$ schließt sich dann eine weitere Weiche $W_{10}$ an.

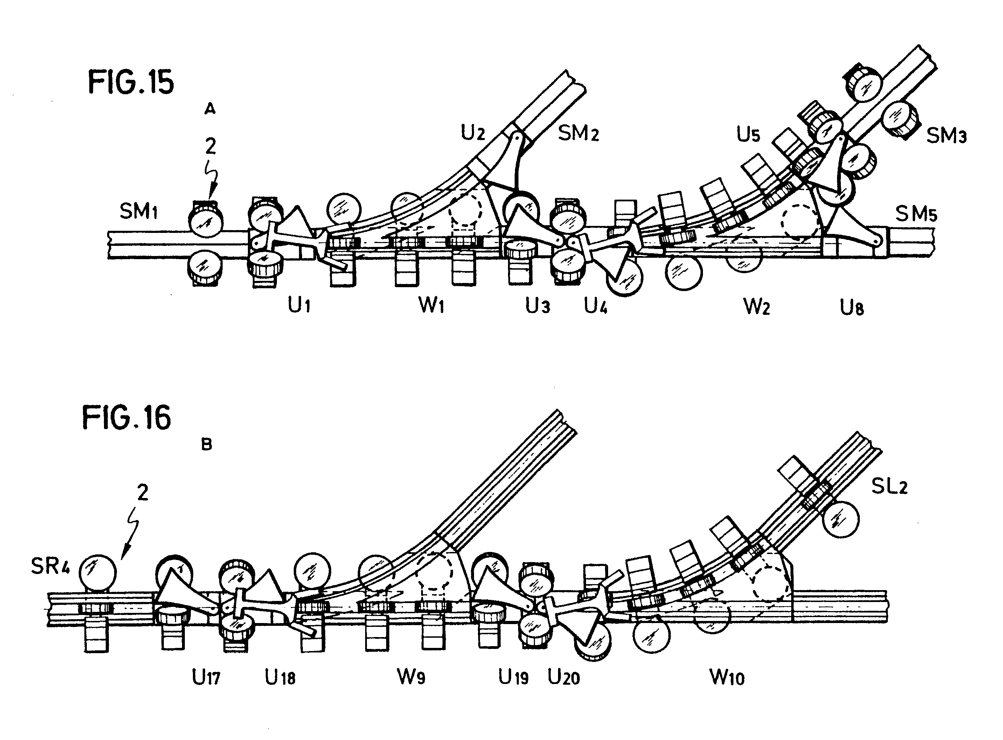

Zum besseren Verständnis sind in den Fig. 15 und 16 die mit einer Strich-Doppelpunkt-Linie umgrenzten Einzelheiten A und B aus Fig.14 dinglich mit den verschiedenen, aufeinanderfolgenden Stellungen eines durchlaufenden Betriebsmittels dargestellt.

In Fig.15 kommt das Betriebsmittel auf der Schiene $SM_1$ in mittenabgehängter Position an, durchläuft die Wechseleinrichtung $U_1$, die in ihrer Betriebsstellung I steht und wird in der rechtsabgehängten Position in die Weiche $W_1$ eingeleitet. Am Ende der Weiche $W_1$ ist die Kombination der

Wechseleinrichtungen $U_3/U_4$ angeordnet. Die Wechseleinrichtung $U_3$ ist um 180° verdreht zu $U_1$ angeordnetund in einer Stellung festgelegt, in der das rechtsabgehängt einlaufende Betriebsmittel in seine mittenabgehängte Position überführt wird. In der mittenabgehängten Position läuft das Betriebsmittel in die Wechseleinrichtung $U_4$ ein, die in die Betriebsstellung II verstellt wurde. Das Betriebsmittel wird somit aus der mittenabgehängten Position in die linksabgehängte Position überführt und läuft in dieser Stellung in die Weiche $W_2$ ein. Am Ende der Weiche $W_2$ ist die Wechseleinrichtung $U_5$ angeordnet, die in der gezeichneten Betriebsstellung festgelegt wurde. Durch die Wechseleinrichtung $U_5$ wird das linksabgehängt ankommende Betriebsmittel wieder in seine mittenabgehängte Position überführt und in dieser Position auf die Schiene $SM_3$ geleitet.

Fig.16 zeigt die Einzelheit B aus Fig.14. Das Betriebsmittel kommt hier auf der Schiene $SR_4$ in rechtsabgehängter Position an und läuft in die Wechseleinrichtung $U_{17}$ ein, die in der gezeichneten Betriebsstellung festgelegt ist. Durch $U_{17}$ wird das Betriebsmittel aus der rechtsabgehängten Position in die mittenabgehängte Position überführt und läuft in dieser Position in die Wechseleinrichtung $U_{18}$ ein, die wahlweise in beide Betriebsstellungen I und II verstellbar ist. In der dargestellten Betriebsstellung I wird das Betriebsmittel wiederum in seine rechtsabgehängte Position verdreht und läuft in dieser Position durch die Weiche $W_9$. Am Ausgang der Weiche $W_9$ ist die zweite Kombination der Wechseleinrichtungen $U_{19}/U_{20}$ angeordnet, wobei die Wechseleinrichtung $U_{19}$ analog der Wechseleinrichtung $U_{17}$ ausgebildet, angeordnet und eingestellt ist, so daß das Betriebsmittel aus der rechtsabgehängten Position in die mittenabgehängte Position überführt wird. Die Wechseleinrichtung $U_{20}$ steht in ihrer Betriebsstellung II, so daß das Betriebsmittel in die linksabgehängte Position überführt wird, in dieser Position die Weiche $W_{10}$ durchläuft und auf eine Schiene $SL_2$ übergeleitet wird.

Aus den Fig. 14 bis 16 ist deutlich ersichtlich, daß das erfindungsgemäße Hängefördersystem ganz gezielt auf die betrieblichen Erfordernisse zugeschnitten werden kann, wobei nur eine geringe Anzahl von Einzelteilen erforderlich ist. An Weichen müssen beispielsweise nur drei Typen, d.h. links- bzw. rechtsabgehende Weichen wie $W_1$ bzw. $W_7$ und Gabelungen, wie z.B. $W_8$ vorgesehen werden. Alle Weichen können als kompakte einstückige Formteile, beispielsweise aus Kunststoff, gefertigt werden, wobei keinerlei bewegliche tragende Teile erforderlich sind. Die im erfindungsgemäßen Hängefördersystem verwendeten Weichen können auf einfache Weise auch mit konventionellen Weichen kombiniert werden, so daß sich beispielsweise eine Drei-Wege-Weiche ergibt.

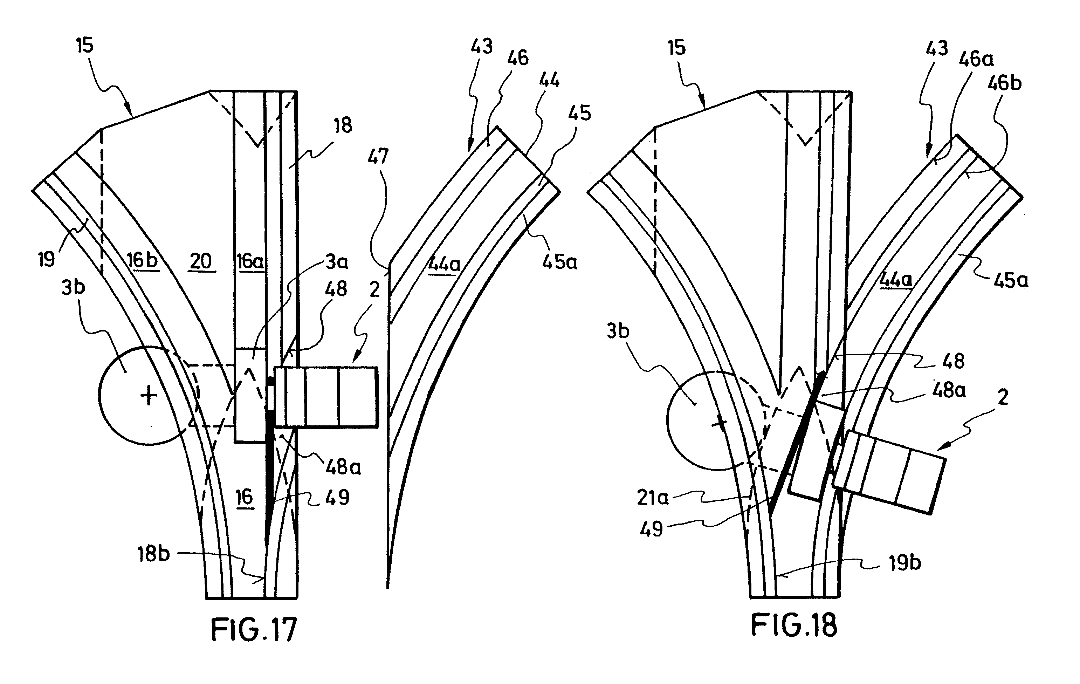

Eine solche Kombination einer konventionellen Weiche 43 mit der einstückig ausgebildeten, erfindungsgemäßen Weiche 15, ist beispielsweise aus den Fig. 17 und 18 ersichtlich. Die dargestellte Weiche 15 ist als Abzweigung ausgebildet und weist eine sich geradlinig an die Laufbahn 16 anschließende Laufbahn 16a für das Betriebsmittel 2 in der rechtsabgehängten Position und eine bogig verlaufende Lauffläche 16b für das Betriebsmittel 2 in seiner linksabgehängten Position auf. Die zusätzliche Weiche 43 enthält ein Schienenstück 44 mit einer Laufbahn 44a. Das Schienenstück 44 kann zweckmäßigerweise einen Querschnitt aufweisen, der dem der Schienen 6 entspricht, d.h. die Laufbahn 44a ist durch Stege 45 und 46 begrenzt, die in bereits beschriebener Weise die Anschlagflächen 45a, 45b und 46a, 46b aufweisen. Das Schienenstück 44 endet in einer Ansatzfläche 47, mit der es an die Außenseite des Steges 18 der Weiche 15 angelegt werden kann. Der Winkel, unter dem die Ansatzfläche 47 zur Laufbahn 44a verläuft, bestimmt die Abzweigrichtung der zusätzlichen Weiche 43.

Der Steg 18 der Weiche 15 weist eine Durchbruchsstelle 48 mit einem Laufbahnstück 48a auf, das als Verlängerung der Laufbahn 16 ausgebildet ist. Die Richtung des Laufbahnstückes 48a entspricht der Richtung der Laufbahn 44a in angesetztem Zustand der Weiche 43. Am Steg 18a ist ein den Durchbruch 48 abschließendes, als schwenkbare Zunge 49 ausgebildetes Verschlußteil gelagert. Aus Gründen der Deutlichkeit ist das Verschlußteil 49 geschwärzt.

In der in Fig. 17 gezeichneten Position ist die zusätzliche Weiche 43 weggezogen und die Zunge 49 derart verschwenkt, daß sie die Durchbruchsstelle 48 verschließt und eine von der Laufbahn 16 auf die Laufbahn 16a durchgehende Anlagefläche 18b bildet. In dieser Stellung arbeitet die Weiche 15 wie beschrieben.

In Fig. 18 ist die zusätzliche Weiche 43 angesetzt und die Zunge 49 derart verschwenkt, daß sie die Durchbruchsstelle 48 öffnet und eine Verbindung zwischen der Fläche 19b des Steges 19 und der Fläche 46b des Steges 46 bildet. In dieser Stellung der Weiche 43 wird ein rechtsabgehängt ankommendes Betriebsmittel 2 über das Laufbahnstück 48a auf die Laufbahn 44a geleitet. Dabei muß jedoch die Führungsfläche 21a derart geneigt sein, daß sie die Laufrolle 3b auf die Anlagefläche 46a des Schienenstückes 44 überleitet. Das Ansetzen und Wegführen der zusätzlichen Weiche 43 erfolgt durch bekannte Weichenstellmittel. Das Verschwenken der Zunge 49 kann per Hand oder durch andere Betätigungsmittel erfolgen. Bevorzugt wird jedoch die Zunge durch das Heranführen der zusätzlichen Weiche 43 selbst verstellt, was durch geeignete Mitnahmeeinrichtungen erreicht werden kann.

Es ist möglich, die Weiche aus einfachen Schienenstücken zusammenzubauen, indem jeweils ein Stück der einander anliegenden Stege entfernt wird, so daß sich zumindest eine Verzweigungsstelle mit zwei abgehenden Laufbahnen ergibt. Zum Ansetzen einer zusätzlichen Weiche ist es weiterhin möglich, den Steg im Bereich der Durchbruchsstelle elastisch oder nach unten wegdrückbar auszubilden, so daß er beim Ansetzen der mit einem entsprechenden Mitnahmeelement ausgerüsteten zusätzlichen Weiche nach unten weggedrückt wird.

Wie aus den Fig.14 bis 16 hervorgeht, ist im Prinzip nur ein einziger Typ der Wechseleinrichtung nach den Fig.9 bis 11 erforderlich, mit der je nach ihrer Anordnung im Schienenweg und je nach ihrer Betriebsstellung die unterschiedlichsten Verdrehbewegungen des Betriebsmittels erreicht werden können. Es ist jedoch zweckmäßig, für diejenigen Wechseleinrichtungen, die in ihrer Betriebsstellung fest gelegt sind, d.h. nur eine einzige Drehbewegung vor und zurück einleiten müssen, einen vereinfachten Typ einer Wechseleinrichtung zu verwenden, der lediglich aus dem Zylinder und der Zwangsführung besteht. Wenn ein nicht drehbarer Zylinder bzw. ein Zylinder mit nicht drehbaren Enden verwendet wird, so kann die Zwangsführung in der gewünschten Position auf dem Zylinder festgelegt werden.

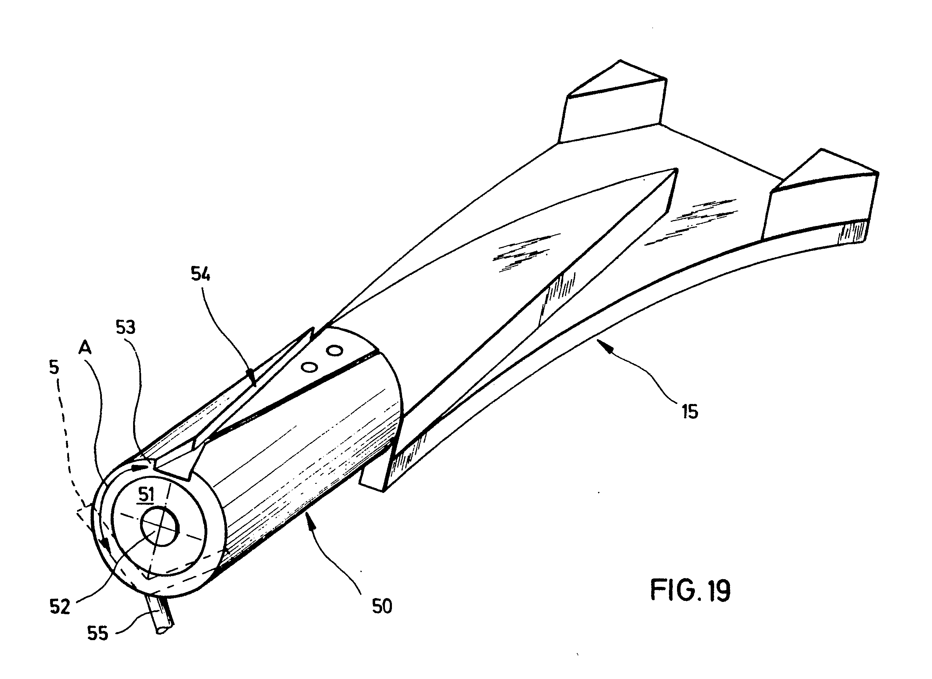

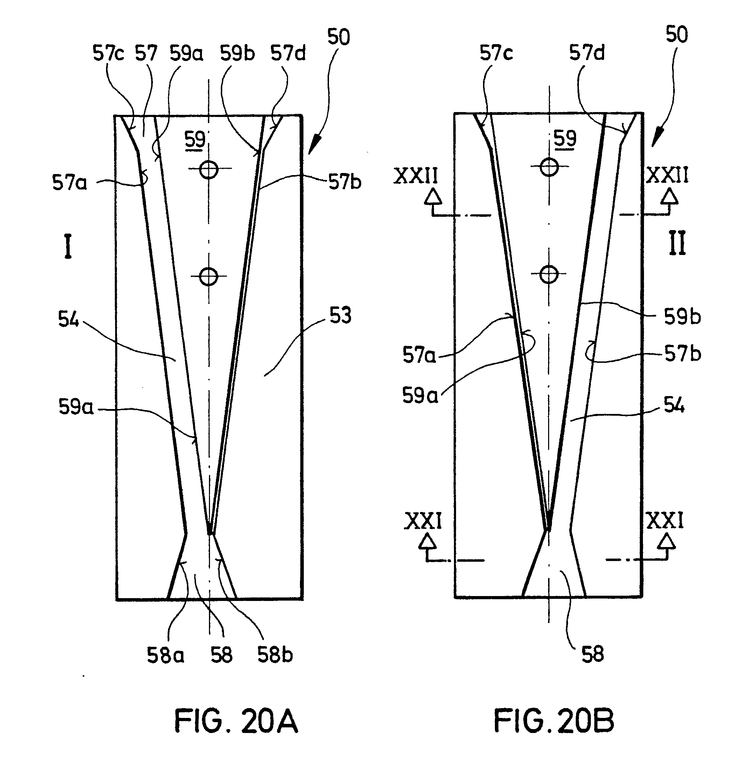

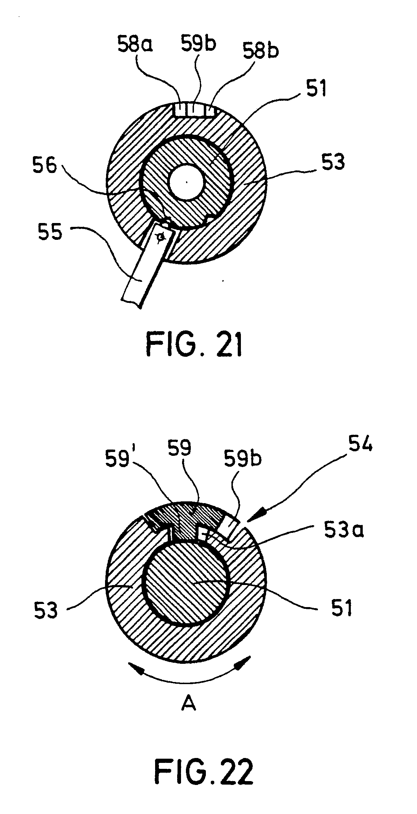

Aus Fig.19 ist ein weiteres Ausführungsbeispiel einer Wechseleinrichtung 50 ersichtlich, die an einer der beschriebenen Weichen 15 (Linksabzweigung) befestigt ist. Aus Gründen der Deutlichkeit zeigt Fig.19 eine Sicht auf die Unterseite. Die ankommende Schiene 5 für die mittenabgehängte Position ist nur in gebrochenen Linien angedeutet. Die Wechseleinrichtung 50 besteht aus einem Kern 51, der unverdrehbar durch eine Schraubbohrung 52 mit der Schiene 5 und ebenso unverdrehbar in nichtgezeichneter Weise mit der Weiche 15 verbunden ist. Auf dem Kern 51 ist eine Zylinderhülse 53 aufgeschoben und in Richtung des Doppelpfeiles A in zwei Drehrichtungen verdrehbar. Wie insbesondere auch in Verbindung mit den Fig.20 bis 22 zu erkennen ist, weist die Zylinderhülse 53 an ihrer den Laufbahnen abgewandten Seite eine Führungsnut 54 und an ihrer Oberseite einen Raststift 55 auf. Der Raststift 55 (Fig.21) ist in üblicher Weise mit einer federbelasteten Kugel ausgerüstet, die in entsprechende Vertiefungen 56 in der Oberfläche des Kernes 51 einrastet und somit die jeweilige Betriebsstellung der Zylinderhülse 53 bezüglich des Kernes 51 festlegen. Die Führungsnut 54 wird durch die folgende Konstruktion gebildet: Die Zylinderhülse 53 enthält eine Ausnehmung 57, deren Seitenwände 57a und 57b in Form eines gleichschenkligen Dreieckes verlaufen, dessen Basis in Richtung auf die Weiche 15 angeordnet ist. Die Ausnehmung 57 ist kürzer als die axiale Länge der Zylinderhülse 53, wobei eine Einlaufnut 58 vorgesehen ist, die die Ausnehmung 57 bis zum Ende der Zylinderhülse 53 verlängert. Die Einlaufnut 58 weist in Richtung auf die Ausnehmung 57 in Form eines gleichschenkligen Dreiecks aufeinander zulaufende Seitenwände 58a, 58b auf, die mit der Mittellinie durch die Ausnehmung 57 und die Einlaufnut 58 den gleichen Winkel einschließen, wie die Seitenflächen 57a und 57b der Ausnehmung 57. Mit dem unverdrehbaren Kern 51 ist ein Abweiser 59 ebenfalls unverdrehbar verbunden. Wie insbesondere Fig.22 zeigt, weist der Abweiser 59 einen Steg 59' auf, der sich durch eine Öffnung 53a in der Zylinderhülse 53 erstreckt und am Kern 51 festgeschraubt ist. Der Steg 59' und die Öffnung 53a haben bevorzugt eine langovale Form, wobei die Öffnung 53a in Umfangsrichtung des Zylinders 53 um so viel breiter als der Steg 59' ist, daß sich der Zylinder 53 in Richtung des Pfeiles A um den gewünschten Drehwinkel ungehindert verdrehen kann.

Der Abweiser 59 weist ebenfalls Seitenflächen 59a und 59b auf, die in Form eines gleichschenkligen Dreieckes angeordnet sind, das in geometrischer Hinsicht ähnlich ist dem Dreieck der Ausnehmung 57. Der Abweiser 59 reicht mit seiner Spitze bis zum Beginn der Einlaufnut 58 und ist um die Breite der Führungsnut 54 schmaler als die Ausnehmung 57.

Wie ein Vergleich der Fig.20A und 20B zeigt, funktioniert die Umschaltung von einer Betriebsstellung in die andere Betriebsstellung der Wechseleinrichtung 50 folgendermaßen: Vorzugsweise per Hand am Stift 55 wird, unter gleichzeitigem Lösen des Rasteingriffes der Kugel aus der Vertiefung 56, die Zylinderhülse 53 gegenüber dem Kern 51 aus der Stellung in Fig.20 derart verdreht, bis die Seitenfläche 57a der Ausnehmung 57 an die Seitenfläche 59a des Abweisers 59 anstößt. Dadurch öffnet sich jedoch zwischen der Seitenfläche 59b des Abweisers 59 und der Seitenfläche 57b der Ausnehmung 57 wiederum eine Führungsnut 54, die jedoch in die gewünschte Richtung weist.

Durch die ähnliche Ausgestaltung der dreieckigen Formen der Ausnehmung 57, des Abweisers 59 und der Einlaufnut 58 ist sichergestellt, daß in der Betriebsstellung I aus Fig.20A die Seitenfläche 58b der Einlaufnut mit der Seitenfläche 59a des Abweisers fluchtet, so daß eine durchgehende Führungsnut 54 geschaffen wird. In der Betriebsstellung II in Fig.20b fluchtet die Seitenläche 58a der Einlaufnut 58 mit der Seitenfläche 59b des Abweisers 59, so daß auch hier eine durchgehende Führungsnut 54 gebildet wird.

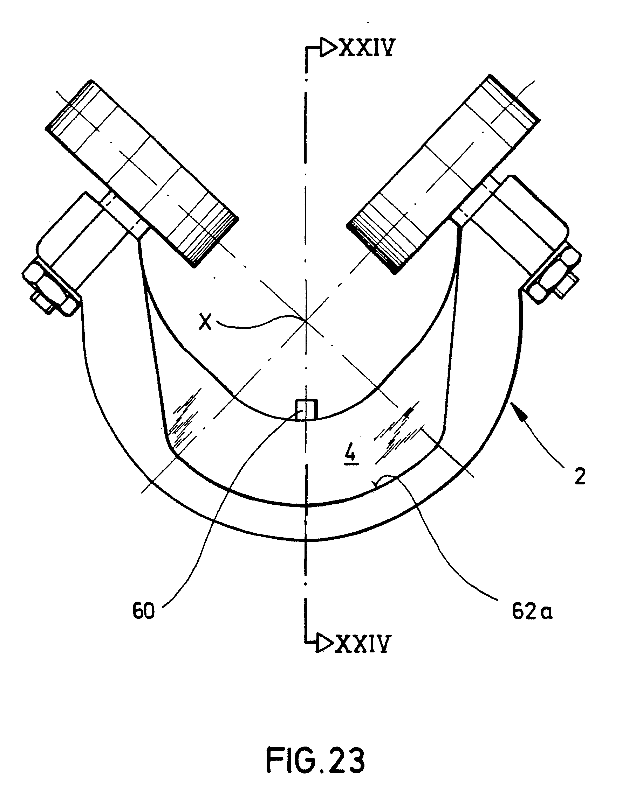

In der Führungsnut 54 läuft der Stift 60 des in Fig.23 dargestellten Betriebsmittels 2. Wie ersichtlich, ist der Stift 60 genau in der Symmetrieachse des Betriebsmittels 2 an der Innenseite des Bügels 4 angeordnet und steht so weit aus der Oberfläche des Bügels 4 vor, daß ein sicherer Eingriff mit der Führungsnut 54 der Wechseleinrichtung 50 gesichert ist.

Der Führungsstift 60 kann einen runden oder einen langovalen Querschnitt aufweisen, wobei sich im letzteren Falle die längeren Abmessungen senkrecht zur Zeichnungsebene erstrecken. Durch den ovalen Querschnitt wird ein besseres Ein- und Durchlaufen des Stiftes durch die Führungsnut 54 erreicht. Um die Reibung zu vermindern, kann der Stift 60 auch drehbar im Bügel 4 gehalten sein, bzw. eine drehbare Ummantelung aufweisen.

Um Reibung und Laufgeräusche weiter zu vermindern, haben sich insbesondere die folgenden Werkstoffkombinationen als zweckmäßig herausgestellt: Die Zylinderhülse 53 aus Polyamid in Verbindung mit einem Stahlstift oder die Zylinderhülse 53 aus Aluminium oder einem anderen Metall in Verbindung mit einem Polyamidstift oder einer Polyamidumhüllung des Stiftes 60. Andere Kunststoffe, wie z.B. Polytetrafluoräthylen, und/oder andere Werkstoffkombinationen sind ebenfalls denkbar.

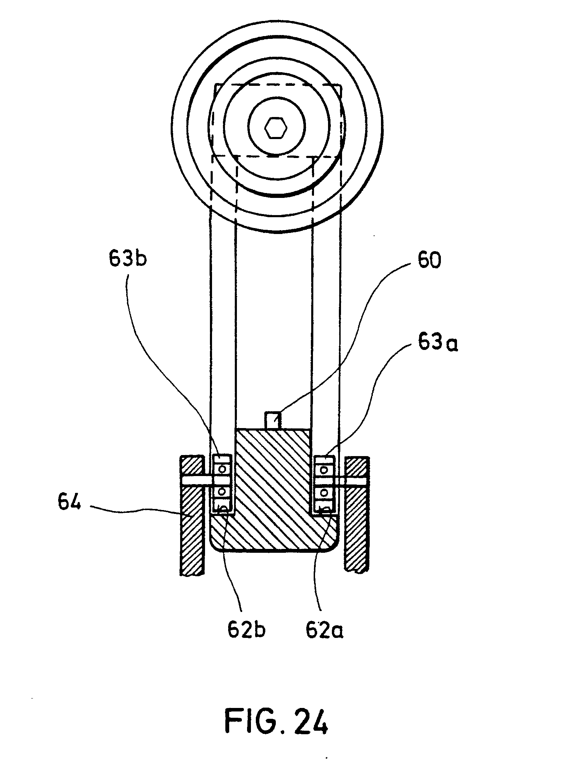

Das Betriebsmittel 2 der Fig.23 weist eine weitere Abweichung auf; und zwar betrifft diese die Anordnung jeweils einer Rollfläche 62a und 62b anstelle der Führungsschlitze 25a und 25b. Die Rollflächen 62 sind in gleicher Weise um die imaginäre Drehachse S angeordnet, wie bereits anhand der Führung 25 beschrieben. Wie Fig.24 zeigt, rollen auf jeder der Rollflächen 62a und 62b jeweils ein Rollrad 63a und 63b ab, die drehbar in einer nur schematisch angedeuteten Gabel 64 gelagert sind. An der Gabel 64 wird in bereits beschriebener Art und Weise der zu fördernde Gegenstand befestigt.

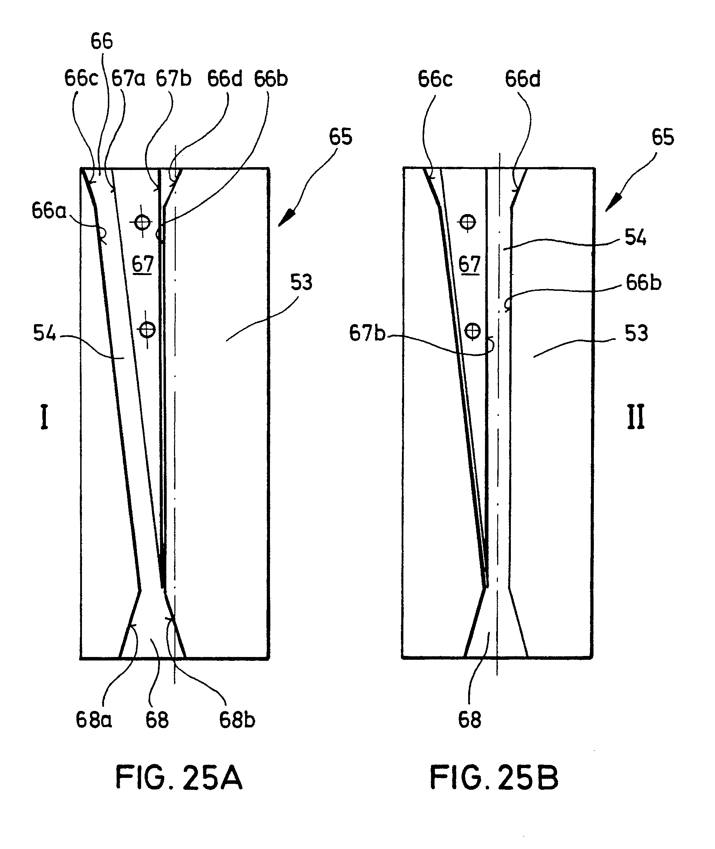

In den Fig.25A und 25B ist ein weiteres Ausführungsbeispiel einer Wechseleinrichtung 65 dargestellt, die der Wechseleinrichtung 50 bis auf die nachstehend beschriebenen Einzelheiten gleicht, wobei gleiche Bezugszeichen gleiche Teile bezeichnen. Die Wechseleinrichtung 65 ist für einen Schienenweg gedacht, in der lediglich zwei verschiedene Positionen des Betriebsmittels erforderlich sind. Die Wechseleinrichtung 65 besteht wiederum aus einer Zylinderhülse 53, die in bereits beschriebener Weise auf dem Kern drehbar befestigt ist. In der Unterseite der Zylinderhülse 53 ist eine Ausnehmung 66 vorgesehen, deren Seitenwände 66a und 66b ein rechtwinkliges Dreieck bilden, wobei einer der rechtwinkligen Schenkel (Seitenfläche 66b) in Laufrichtung angeordnet ist. Die Basis des Dreiecks weist wiederum z.B. in Richtung einer Weiche. Als geometrisch ähnliches aber um die Breite der Führungsnut 54 kleineres, rechtwinkliges Dreieck ist ein Abweiser 67 mit seinen Seitenflächen 67a und 67b unverdrehbar mit dem Kern verbunden. Auch die Ausnehmung 66 und der Abweiser 67 sind kürzer als die Länge der Zylinderhülse 53 und setzen sich in einer Einlaufnut 68 fort. Die Einlaufnut 68 ist jedoch als gleichschenkliges Dreieck mit den Seitenflächen 68a und 68b ausgebildet, wobei zumindest die Seitenfläche 68b mit der Laufrichtung den gleichen Winkel einschließt, wie die Seitenfläche 67a des Abweisers 67. Die Seitenfläche 68a kann vom Beginn der Zylinderhülse 53 auch gerade nach innen verlaufen.

Im dargestellten Ausführungsbeispiel ist die Wechseleinrichtung 65 zum Verdrehen des Betriebsmittels 2 aus einer mittenabgehängten Position in eine rechtsabgehängte Position ausgebildet. Bei entsprechend ausgebildeten Schienen, z.B. Schienen mit zylindrischer Lauffläche kann die Wechseleinrichtung 65 in ihrer zweiten Betriebsstellung auch zum Durchlaufen in der mittenabgehängten Position verwendet werden.

Die Verdrehstellung ist in Fig.25A ersichtlich. Wie der Figur zu entnehmen ist, ist die Zylinderhülse 53 in einer Stellung, in der die Seitenfläche 66b der Ausnehmung an die Seitenfläche 67b des Abweisers 67 angeschlagen ist, während sich zwischen den Seitenflächen 66a und 67a die Führungsnut 54 geöffnet hat. Der Stift 60 des in einer mittenabgehängten Position ankommenden Betriebsmittels 2 tritt entlang der eingezeichneten Mittellinie in die Einlaufnut 68 ein, trifft auf die Seitenfläche 68b und wird von dieser auf die Seitenfläche 67a des Abweisers geleitet. Dabei wird der Bügel 4 des Betriebsmittels 2 in eine rechtsabgehängte Position verdreht.

Wird ein Durchlauf in mittenabgehängter Position gewünscht, so wird der Zylinder 53 in die zweite Betriebsstellung verdreht, in der die Seitenfläche 66a an die Seitenfläche 67a des Abweisers anstößt, während sich die Führungsnut 54 zwischen den Seitenflächen 66b und 67b öffnet. In dieser Stellung befindet sich die Führungsnut 54 in der senkrechten Mittelebene der Wechseleinrichtung 65, so daß der Stift 60 ohne Verdrehung durchlaufen kann.

Die Wechseleinrichtung 65 kann zum Umwechseln von einer mittenabgehängten, in eine linksabgehängte Position dadurch umgeschaltet werden, daß die Ausnehmung 66 und der Abweiser 67 um die senkrechte Mittelebene der Wechseleinrichtung 65 spiegelbildlich angeordnet werden.

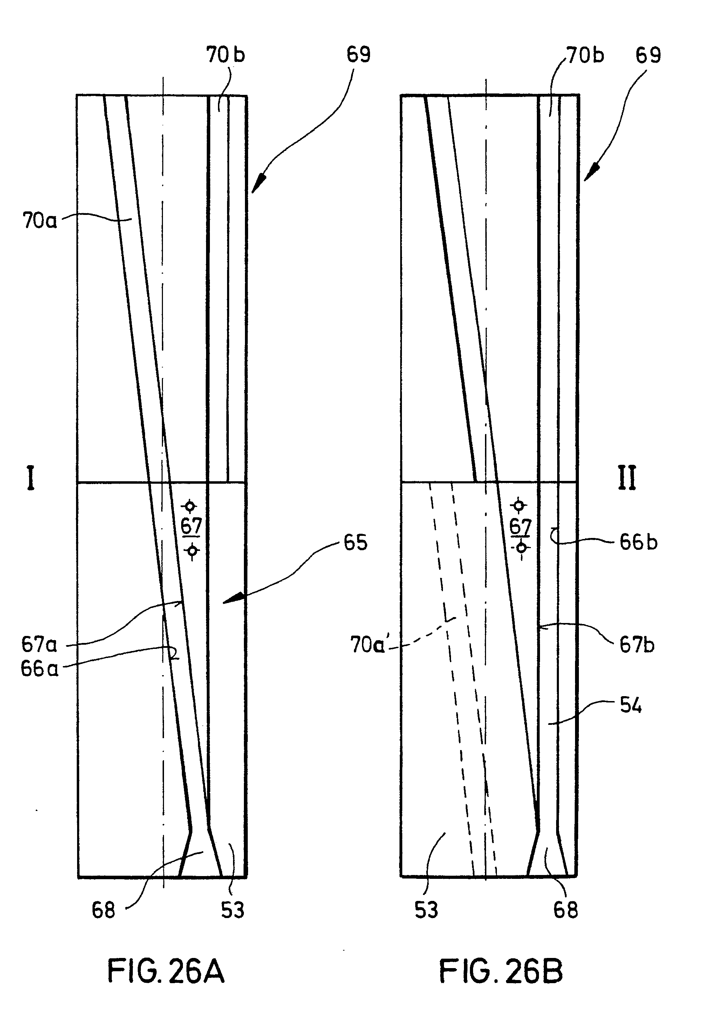

Während die Wechseleinrichtungen 9 und 50 spiegelbildlich hintereinander angeordnet werden können, um einen Wechsel von einer linksabgehängten auf eine rechtsabgehängte und von einer rechtsabgehängten auf eine linksabgehängte Position zu ermöglichen, d.h. den Bügel über den gesamten Verdrehwinkel zu verdrehen, ist in den Ausführungsformen nach den Fig.26A und 26B die Wechseleinrichtung 65 mit einem Zwischenführungsteil 69 kombiniert. Mit einer derartigen Kombination ist es möglich, das Betriebsmittel enweder in der rechts- oder linksabgehängten Position durchlaufen zu lassen, oder aber in die links- oder rechtsabgehängte Position zu verdrehen. Das Zwischenführungsteil 69 ist als Zylinder mit dem gleichen Außendurchmesser wie die Zylinderhülse 53 ausgebildet. Das Zwischenführungsteil 69 ist jedoch unverdrehbar in der gewählten Position beispielsweise am Kern 51 und einer nachfolgenden Weiche 15 festgelegt und weist zwei ebenfalls festgelegte Verlängerungsnuten 70a und 70b auf. Die Verlängerungsnut 70a fluchtet mit der sich zwischen den Seitenflächen 66a und 67a öffnenden Führungsnut, während die Verlängerungsnut 70b mit der sich zwischen den Seitenflächen 67b und 66b öffnenden Führungsnut ausgerichtet ist. Im dargestellten Ausführungsbeispiel ist die Wechseleinrichtung 65 für ein in linksabgehängter Position ankommendes Betriebsmittel ausgelegt. Die Verdrehposition ist in Fig.26A gezeigt, wobei die Zylinderhülse 53 in eine Betriebsstellung verdreht wurde, in der sich die Führungsnut zwischen den Seitenwänden 66a und 67a geöffnet hat. Der Stift 60 des Betriebsmittels tritt in linksabgehängter Position in die Einlaufnut 68 ein und wird durch die Führungsnut 54 in der Wechseleinrichtung 65 nach unten in Richtung auf die senkrechte Mittelebene durch die Wechseleinrichtung 65 bewegt. Hat der Führungsstift 60 die senkrechte Mittelebene erreicht, so befindet sich das Betriebsmittel in einer mittenabgehängten Position, die genau am Übergang zwischen der Wechseleinrichtung 65 und dem Zwischenführungsteil 69 erreicht ist. Durch die Verlängerungsnut 70a wird hernach der Führungsstift 60 in die andere Richtung von der senkrechten Mittelebene weg nach oben bewegt, bis er am Ende des Zwischenführungsteiles 69 die rechtsabgehängte Position erreicht hat.

Soll das Betriebsmittel hingegen in der linksabgehängten Position durchlaufen, so wird die Zylinderhülse 53 in die zweite Betriebsstellung verdreht, in der sich die Führungsnut 54 zwischen den Seitenflächen 66b und 67b öffnet und den Zugang zur Verlängerungsnut 70b freigibt. Die Verlängerungsnut 70b und die sich zwischen den Seitenflächen 66b und 67b öffnende Führungsnut verlaufen in gleicher Höhe und im gleichen Abstand zur senkrechten Mittelebene, so daß das Betriebsmittel in der angekommenen Position durchlaufen kann.

Soll die Ausführungsform nach den Fig.26A und 26B für rechtsabgehängt ankommende Betriebsmittel umgestaltet werden, so müssen die entsprechenden Nuten spiegelbildlich zur senkrechten Mittelebene angeordnet werden.

Das Zwischenführungsteil 69 wurde in den Fig.26A und 26B als gesondert zu fertigendes Teil dargestellt. Es ist jedoch auch möglich, die Wechseleinrichtung 65 derart abzuwandeln, daß die in Fig.26 beschriebene Funktion auch mit zwei gleichsinnig hintereinander geschalteten Wechseleinrichtungen 65 durchführbar ist. Zu diesem Zweck muß lediglich eine der Verlängerungsnut 70a vergleichbare Nut 70a' in die Zylinderhülse 53 eingearbeitet werden, deren Beginn von der Einlaufnut 68 einen Abstand aufweist, der dem Verdrehabstand des Führungsstiftes 60 zwischen der seitenabgehängten Position und der mittenabgehängten Position entspricht. D.h., die als Verlängerungsnut 70a einsetzbare zusätzliche Führungsnut müßte bei der in der Fig.26B dargestellten Stellung der Zylinderhülse 53 mit ihrem in Laufrichtung vorderen Ende in der senkrechten Mittelebene der Wechseleinrichtung 65 beginnen. Weiterhin müßte die Zylinderhülse 53 der Wechseleinrichtung 65, die das Zwischenführungsteil 69 ersetzen soll, in der in Fig.26B gezeichneten Betriebsstellung festgelegt werden, in der die Führungsnut 54 zwischen den Seitenflächen 66b und 67b offen ist. Diese offene Führungsnut wird fluchtend mit der sich öffnenden Führungsnut zwischen den beiden gleichen Seitenflächen der in Laufrichtung vorderen, verdrehbaren Wechseleinrichtung 65 ausgerichtet, wobei die zusätzliche Nut 70a' der festgestellten, hinteren Wechseleinrichtung 65 mit der sich zwischen den Seitenflächen 66a und 67a öffnenden Führungsnut in der verdrehbaren Wechseleinrichtung 65 fluchtet.

Wie bereits aus einem Vergleich der Figuren 25 und 26 hervorgeht, kann insbesondere die Wechseleinrichtung 65 mit je nach Verwendungszweck unterschiedlichen Lagen des Abweisers zur senkrechten Mittelebene durch die Wechseleinrichtung in den Schienenweg eingeschaltet werden.

So ist die Einlaufnut 68 in Fig.25 derart ausgerichtet, daß in jeder Stellung der Zylinderhülse 53 der Führungsstift eines in mittenabgehängter Position ankommenden Betriebsmittels in die Führungsnut 54 geleitet wird. Demgegenüber ist die Wechseleinrichtung 65 in Fig.26 derart verdreht angeordnet, daß der Führungsstift eines in linksabgehängter Position ankommenden Betriebsmittel in jeder Stellung der Zylinderhülse 53 in die Einlaufnut 68 gelangen kann.

Für den Fall, daß ein mit den Wechseleinrichtungen 50 und 65 ausgerüsteter Schienenweg auch in einer der bisher beschriebenen Laufrichtung entgegengesetzten, zweiten Laufrichtung befahren werden soll, können, ebenso wie bei der Wechseleinrichtung 9, Vorkehrungen getroffen werden, daß ein auf eine geschlossene Führungsnut auftreffendes Betriebsmittel sich den Weg selbst freischalten kann. Zu diesem Zweck sind, wie in den Fig.20 und 25 ersichtlich, Freischaltflächen c und d vorgesehen, die in Verlängerung der Seitenflächen der Ausnehmungen 57 und 66 in der Zylinderhülse 53 vorgesehen sind. Wie die Fig.20 zeigt, verlaufen die Freischaltflächen 57c und 57d der Ausnehmung 57 jeweils schräg nach außen, so daß sich eine trichterartige Erweiterung ergibt. Zweckmäßigerweise ist die Erweiterung so groß, daß beispielsweise zwischen der Freischaltfläche 57b und der Seitenfläche 59b des Abweisers 59 bei anliegender Seitenfläche 57b der Ausnehmung 57 ein sich trichterartig verengender Spalt verbleibt, dessen Basis größer oder gleich groß ist als der Durchmesser des Führungsstiftes 60. Ein in der umgekehrten, zweiten Laufrichtung in der Fig.20A linksabgehängten Position des Betriebsmittels ankommender Führungsstift 60 taucht somit in den Freiraum zwischen dem Abweiser 59 und der Freischaltfläche 57d ein und trifft auf die Freischaltfläche 57d. Durch den schrägen Verlauf der Freischaltfläche 57d zu seiner Laufrichtung, wird der Stift in das Innere des Freiraumes hineingeleitet und drückt dabei (unter oder nach dem Lösen des Raststiftes 55) die Seitenfläche 57b der Ausnehmung 57 aus ihrer Anlage an der Seitenfläche 59b des Abweisers 59, wobei sich die Führungsnut an der gewünschten Stelle öffnet. In analoger Weise wirken die Freischaltfläche 57c und die Freischaltflächen 66c und 66d aus Fig.25.

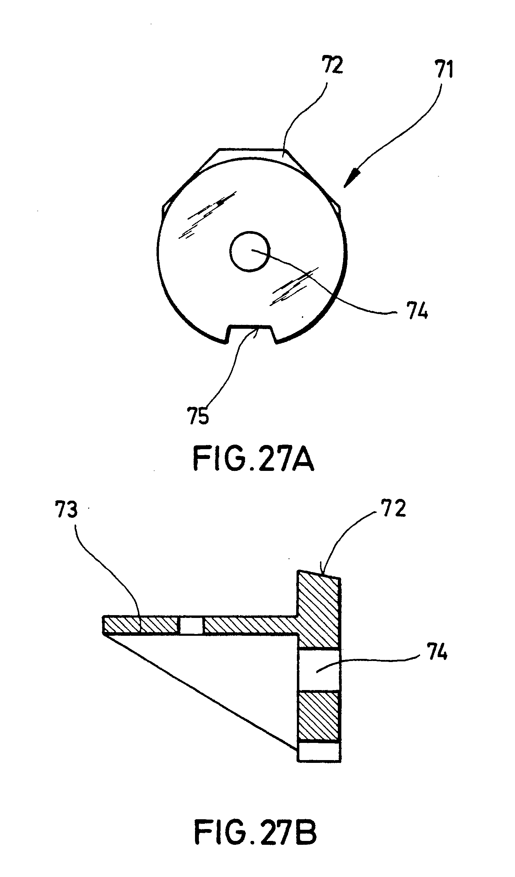

Um das Ein- oder Auslaufen des Betriebsmittels in und aus der Wechseleinrichtung flüssiger zu machen und um Laufgeräusche weiter zu vermindern, ist der in Fig.27A und 27B dargestellte Adapter 71 vorgesehen. Der Adapter 71 weist eine Lauffläche 72 auf, die im dargestellten Ausführungsbeispiel von einer Dreikant- oder trapezförmigen Schienenform auf die runde Laufbahn der Wechseleinrichtungen überleitet. Der Adapter 71 kann beispielsweise mit Hilfe eines Steges 73 an der Schiene 5 und mit einer durch eine Bohrung 74 geführten Schraube an der Wechseleinrichtung befestigt werden. Bei Verwendung zusammen mit den Wechseleinrichtungen 50 und 65 ist im unteren Teil des Adapters 71 eine Nut 75 vorgesehen, die mit der Einlaufnut 68 bzw. 58 fluchtet.

Die Erfindung ist nicht auf die beschriebenen und gezeichneten Ausführungsbeispiele beschränkt, wobei insbesondere die in den einzelnen Figuren dargestellten Einzelheiten untereinander ausgetauscht werden können. So kann die Ausgestaltung der Schienen und Weichen bzw. Abzweigungen in gleicher Weise erfolgen, wie im ersten Ausführungsbeispiel beschrieben. Für jeden Durchlauf gleichbleibende Wechsel der Abhängungsposition können, wie im ersten Ausführungsbeispiel, durch in ihrer Stellung fixierte Zwangsführungen oder aber durch von vornherein starr ausgebildete Zwangsführungen bewirkt werden. Dabei sind die starren Zwangsführungen, z.B. ähnlich des Zwischenführungsteils, als in die gewünschte Richtung verlaufende, ständig offen bleibende Führungsnuten ausgebildet.

Es ist beispielsweise nicht unbedingt erforderlich, eine Einlaufnut vorzusehen; vielmehr können Abweiser und Ausnehmung bis zum Ende der Zylinderhülse reichen, wenn sichergestellt wird, daß der Führungsstift bei jeder Lage der Zylinderhülse auf die jeweils offene Führungsnut trifft. Auch die Rastmittel sind beispielsweise als Klinke auszubilden.

Die für das erfindungsgemäße Hängesystem verwendeten Bauteile eignen sich ganz besonders für eine Förderstrecke, die über unterschiedliche Niveaus und unterschiedliche Neigungswinkel, bis zu 30°, führt. Dadurch wird die Einsatzbreite weiter verbessert. Gegebenenfalls kann beispielsweise nach der Wechseleinrichtung und vor einer geneigt angeordneten Weiche ein Zwischenstück eingeschaltet sein, das das waagerecht in einer seitenabgehängten Position ankommende Betriebsmittel ruckfrei auf die geneigte Laufbahn überführt. Ein derartiges Zwischenstück wird zweckmäßigerweise aus Kunststoff gefertigt, bei dem sich der notwendige sanfte Übergang zwischen einer waagerechten Laufbahn und einer geneigten Laufbahn auf einfache Weise herstellen läßt.

Das notwendige Schienenmaterial richtet sich nach den Bedürfnissen. Wie insbesondere aus Fig.16 ersichtlich, ist es möglich, für das erfindungsgemäße Hängefördersystem lediglich Schienen für die beiden Seitenabhängungen zu verwenden. Wenn diese Schienen mit dem vorstehend beschriebenen Querschnitt ausgebildet sind, so kann darüberhinaus die Vorratshaltung entscheidend vereinfacht werden.

Die Wechseleinrichtung muß nicht unbedingt direkt in den Schienenweg eingeschaltet sein. Es ist vielmehr ebenfalls möglich, falls gewünscht, die Wechseleinrichtung außerhalb des Schienenweges anzuordnen und beispielsweise über verstellbare Anschlagbahnen an der Außenseite des Bügels angreifen zu lassen.

Weiterhin kann das Betriebsmittel auch mit einer anders ausgestalteten Gleit- oder Rollführung für das Aufhängeelement der zu fördernden Gegenstände versehen sein, beispielsweise in Form eines einzigen sich durch den gesamten Bügel erstreckenden Schlitzes oder als an der Unterseite des Bügels angeordnete TFührung. Die Führungen für die nicht gewichtstragende Laufrolle in den Weichen können beispielsweise nur mit einer einzigen Abrollfläche bzw. mit einer Anlagefläche für die Oberseite der Laufrolle versehen sein. Auch die Laufbahnen im Inneren der Weichen bzw. der Schienen für Seitenabhängung können, z.B. mit kreisförmigem Querschnitt ebenfalls linienförmig

ausgebildet sein.

## Ansprüche

1. Hängefördersystem zum Fördern von Gegenständen entlang eines Schienenwegs (1) mit einer an einer Schiene (5, 6, 6') angeordneten Laufbahn (5a, 5b, 6a, 6a') für ein Betriebsmittel (2), das eine erste und eine zweite Laufrolle (3a, 3b) enthält, die durch einen offenen, die Schiene teilweise umgreifenden Bügel (4) miteinander verbunden sind, wobei die Laufrollen zum Abrollen auf der Laufbahn unter Aufnahme des Gewichtes der zu fördernden Gegenstände ausgebildet sind, **dadurch gekennzeichnet**, daß im Schienenweg (1) wenigstens zwei der folgenden Schienen vorhanden sind:
   a) Schiene (5) mit zweigeteilter Laufbahn (5a, 5b) für eine mittenabgehängte Position (M) des Betriebsmittels (2),
   b) Schiene (6) mit wenigstens einer Laufbahn (6a) für die erste Laufrolle (3a) in einer rechtsabgehängten Position (R) des Betriebsmittels (2) und
   c) Schiene (6') mit wenigstens einer Laufbahn (6a') für die zweite Laufrolle (3b) in einer linsabgehängten Position (L) des Betriebsmittels (2), und
   daß eine Wechseleinrichtung (9, 50, 65) mit einer in eine erste und eine zweite Betriebsstellung (I, II) derart bewegbaren Zwangsführung (11, 54) für das Betriebsmittel (2) vorgesehen ist, daß sich in einer ersten Laufrichtung der Bügel (4) nach dem Durchlaufen der Zwangsführung (11, 54) in der zweiten Betriebsstellung (II) in einer weiteren, von der ersten verschiedenen Abhängungsposition (L, M, R) befindet.

2. Hängefördersystem nach Anspruch 1, dadurch **gekennzeichnet**, daß sich der Bügel (4) nach dem Durchlaufen der Zwangsführung (11, 54) in einer zweiten, der ersten Laufrichtung entgegengesetzten Laufrichtung wieder in der ursprünglichen Abhängungsposition (M, R, L) befindet.

3. Hängefördersystem nach einem der Ansprüche 1 oder 2, dadurch **gekennzeichnet**, daß die Wechseleinrichtung (9, 50, 65) vor einer Verzweigungsstelle (17) angeordnet ist, in der sich eine ankommende Schiene in mindestens zwei abgehende Schienen verzweigt, und daß eine Leiteinrichtung (18, 19) vorgesehen ist, die sich von der Wechseleinrichtung (9, 50, 65) bis über die Verzweigungsstelle (17) erstreckt.

4. Hängefördersystem nach Anspruch 3,

dadurch **gekennzeichnet**, daß die Verzweigungsstelle (17) auf einer Weiche (15) angeordnet ist, wobei die Weiche (15) als einstückiges Formteil ausgebildet ist und jeweils eine rechts- und linksabgehende Laufbahn (16a, 16b) aufweist, die an der Verzweigungsstelle (17) in ihrer gegenseitigen Lage zueinander festgelegt sind.

5. Hängefördersystem nach Anspruch 4, dadurch **gekennzeichnet**, daß die Laufbahnen (16, 16a, 16b) im Bereich der Weiche (15) im wesentlichen horizontal verlaufen und vom Betriebsmittel (2) in einer seitenabgehängten Position durchfahren werden, in der der Bügel (4) die Schiene links oder rechts seitlich umgreift und nur eine der Laufrollen (3a, 3b) auf der Laufbahn (16, 16a, 16b) abrollt.

6. Hängefördersystem nach einem der Ansprüche 3 bis 5, dadurch **gekennzeichnet**, daß die zwischen der Wechseleinrichtung (9, 50, 65) und der Verzweigungsstellung (17) angeordnete ankommende Schiene mit ihrer Laufbahn (16) einstückig mit den abgehenden Laufbahnen (16a bzw. 16b) verbunden ist.

7. Hängefördersystem nach einem der Ansprüche 3 bis 6, dadurch **gekennzeichnet**, daß die Leiteinrichtung (18, 19) eine rechte bzw. eine linke Anschlagfläche (18a, 19a) an der rechten bzw. linken Außenseite der Weiche (15) aufweist, die jeweils mit einer korrespondierenden Anlagefläche (27a, 27b) am Bügel (4) in der rechts- bzw. in der linksabgehängten Position in Anlage steht.

8. Hängefördersystem nach einem der Ansprüche 3 bis 7, dadurch **gekennzeichnet**, daß die Leiteinrichtung (18, 19) eine rechte bzw. linke Anschlagfläche (18b, 19b) an je einem die Laufbahnen (16, 16a, 16b) rechts bzw. links begrenzenden Steg (18, 19) und jeweils eine korrespondierende Anlagefläche an der ersten und der zweiten Laufrolle (3a, 3b) enthält.

9. Hängefördersystem nach einem der Ansprüche 4 bis 8, dadurch **gekennzeichnet**, daß in der Weiche (15) eine Abzugsstelle für das Betriebsmittel (2) in der rechts- und/oder linksabgehängten Position vorgesehen ist, in der die Dicke der Weiche (15) kleiner ist als der lichte Abstand zwischen den Laufrollen (3a, 3b).

10. Hängefördersystem nach einem der Ansprüche 3 bis 9, dadurch **gekennzeichnet**, daß in der abgehenden Laufbahn (16a, 16b) eine zweite Wechseleinrichtung (9, 50, 65) angeordnet ist.

11. Hängefördersystem nach einem der Ansprüche 1 bis 10, dadurch **gekennzeichnet,** daß im Schienenweg (1) Schienen (5, 6, 6' ) für mittenabgehängte, linksabgehängte und rechtsabgehängte Positionen vorhanden sind.

12. Hängefördersystem nach einem der Ansprüche 1 bis 11, dadurch **gekennzeichnet,** daß die beiden jeweils einer Laufrolle (3a, 3b) zugeteilten Laufbahnen (5a, 5b) der Schiene (5) für die mittenabgehängte Position um einen Winkel von etwa 45° gegenüber der Senkrechten geneigt sind und die Laufbahnen (6a, 6a' ) für die rechts- bzw. linksabgehängte Position im wesentlichen horizontal verlaufen.

13. Hängefördersystem nach einem der, Ansprüche 1 bis 12, dadurch **gekennzeichnet,** daß die Zwangsführung (11, 54) derart angeordnet ist, daß ein in einer mittenabgehängten Position an der Wechseleinrichtung (9, 50) ankommendes Betriebsmittel (2) in der ersten Betriebsstellung (I) in eine rechtsabgehängte Position oder in der zweiten Betriebsstellung (II) in eine linksabgehängte Position verdreht wird.

14. Hängefördersystem nach einem der Ansprüche 1 bis 13, dadurch **gekennzeichnet,** daß die Wechseleinrichtung (9) im Schienenweg (1) angeordnet ist und eine Zwangsführung (11) für mindestens eine Laufrolle (3) enthält.

15. Hängefördersystem nach einem der Ansprüche 1 bis 14, dadurch **gekennzeichnet,** daß die Zwangsführung (11) der Wechseleinrichtung (9) eine rechte und eine linke, um eine im wesentlichen senkrechte Schwenkachse (12) schwenkbare Anschlagbahn (13, 14) enthält.

16. Hängefördersystem nach Anspruch 15, dadurch **gekennzeichnet,** daß in der ersten Betriebsstellung (I) die linke Anschlagbahn (14) einen Anschlag für die in der mittenabgehängten. Position ankommende, zweite Laufrolle (3b) bildet, während die rechte Anschlagbahn (13) als Anschlag für die erste Laufrolle (3a) während der Drehung des Bügels (4) in die rechtsabgehängte Position dient, und wobei in der zweiten Betriebsstellung (II) die rechte Anschlagbahn (13) einen Anschlag für die in der mittenabgehängten Position ankommende, erste Laufrolle (3a) bildet, während die linke Anschlagbahn (14) einen Anschlag für die zweite Laufrolle (3b) während der Drehung des Bügels (4) in die linksabgehängte Position bildet.

17. Hängefördersystem nach einem der Ansprüche 14 bis 16, dadurch **gekennzeichnet,** daß beim Übergang von der linksabgehängten Position auf die mittenabgehängte Position in der zweiten Betriebsstellung (II) die linke Anschlagbahn (14) einen Anschlag für die linksabgehängt ankommende zweite Laufrolle (3b) bildet, während die rechte Anschlagbahn (13) als Anschlag für die erste Laufrolle (3a) während der Drehung des Bügels (4) dient, und daß beim Übergang von der rechtsabgehängten in die mittenabgehängte Position in der ersten Betriebsstellung (I) die rechte Anschlagbahn (13) einen Anschlag für die rechtsabgehängt ankommende, erste Laufrolle (3a) bildet, während die linke Anschlagbahn (14) als Anschlag für die zweite Laufrolle (3b) während der Drehung des Bügels (4) dient.

18. Hängefördersystem nach einem der Ansprüche 14 bis 17, dadurch **gekennzeichnet,** daß sich der Abstand der Anschlagbahnen (13, 14) in von der Schwenkachse (12) wegweisender Richtung vergrößert.

19. Hängefördersystem nach einem der Ansprüche 14 bis 18, dadurch **gekennzeichnet,** daß die Anschlagbahnen als Anschlagflächen (13, 14) ausgebildet sind.

20. Hängefördersystem nach einem der Ansprüche 14 bis 18, dadurch **gekennzeichnet,** daß die Anschlagbahnen auf zwei V-förmig miteinander verbundenen Stäben linienförmig ausgebildet sind.

21. Hängefördersystem nach einem der Ansprüche 14 bis 20, dadurch **gekennzeichnet,** daß die Laufbahn im Bereich der Zwangsführung (11 ) als Teil einer Umfangsfläche eines Zylinders (10) ausgebildet ist, dessen Zylinderachse parallel zur faufrichtung des Betriebsmittels (2) verläuft.

22. Hängefördersystem nach Anspruch 21, dadurch **gekennzeichnet,** daß der Zylinder (10c) drehbar gelagert ist.

23. Hängefördersystem nach einem der Ansprüche 14 bis 22, dadurch **gekennzeichnet,** daß ein Betätigungshebel (37) für die Zwangsführung (11) vorgesehen ist, der eine linke und eine rechte, jeweils mit einer linken und einer rechten Steuerkante (24a, 24b) am Bügel (4) zusammenwirkende Steuerkante (40a, 40h) aufweist, wobei durch den Eingriff der Steuerkanten (24, 40) der Betätigungshebel (37) unter Mitnahme der Zwangsführung (11) in die je-

weils zum Durchlaufen der Wechseleinrichtung (9) notwendige erste oder die zweite Betriebsstellung verschwenkbar ist.

24. Hängefördersystem nach Anspruch 23, dadurch **gekennzeichnet** , daß der Betätigungshebel (37) um eine ortsfeste, parallel zur Schwenkachse (12) der Zwangsführung (11) angeordnete Achse (41) schwenkbar ist und über ein federbelastetes Drehschiebelager (32, 33, 34, 35) mit der Zwangsführung (11) verbunden ist, wobei das Drehschiebelager (32, 33, 34, 35) eine erste und zweite Raststellung aufweist, in der die Zwangsführung (11) in eine erste und zweite Betriebsstellung (I und II) verschwenkt ist.

25. Hängefördersystem nach einem der Ansprüche 23 oder 24 dadurch **gekennzeichnet,** daß die linke und die rechte Steuerkante (40a` 40h) an je-weils einer gabelförmigen Verlängerung (40) des Betätigungshebels (37) angeordnet sind.

26. Hängefördersystem nach einem der Ansprüche 1 bis 13, dadurch **gekennzeichnet,** daß die Wechseleinrichtung (50, 65) im Schienenweg (1) angeordnet ist und eine Zwangsführung (54) für einen am Bügel (4) angeordneten Führungsstift (60) enthält.

27. Hängefördersystem nach Anspruch 26, dadurch **gekennzeichnet,** daß die Zwangsführung als Führungsnut (54) ausgebildet ist.

28. Hängefördersystem nach Anspruch 27, dadurch **gekennzeichnet** , daß die Führungsnut (54) in einem in der Drehrichtung des Bügels (4) verdrehbaren Zylinder (53) gebildet ist.

29. Hängefördersystem nach Anspruch 28, dadurch **gekennzeichnet,** daß im Zylinder (53) eine sich in der ersten Laufrichtung des Betriebsmittels (2) verbreiternde Aussparung (57, 66) vorgesehen ist, und daß im Inneren der Aussparung (57, 66) ein Abweiser (59, 67) unverdrehbar befestigt ist, wobei der Abweiser (59, 67) eine geometrisch ähnliche dreieckige Form wie die Aussparung (57, 66) mit einer um mindestens die Breite der Führungsnut (54) verringerten Breite aufweist, so daß sich beim Verdrehen des Zylinders (53) in die erste oder zweite Betriebsstellung (I, II) jeweils eine Führungsnut (54) zwischen den zueinander parallelen Seitenflächen der Aussparung (57, 66) und des Abweisers (59, 67) öffnet.

30. Hängefördersystem nach einem der Ansprüche 28 oder 29 dadurch **gekennzeichnet** , daß der Zylinder als Zylinderhülse (53) ausgebildet ist, die drebbar um einen unverdrehbar im Schienenweg (1) festgelegten Kern (51) angeordnet ist.

31. Hängefördersystem nach Anspruch 30 dadurch **gekennzeichnet,** daß der Abweiser (59,67) unverdrehbar mit dem Kern (51) verbunden ist.

32. Hängefördersystem nach Anspruch 31, dadurch **gekennzeichnet,** daß der Abweiser (591 67) einen Steg (59') enthält, der sich durch eine Öffnung (53a) in der Zylinderhülse (53) mit größerer Breite als der Steg (59') erstreckt und mit dem Kern (51) verbunden ist.

33. Hängefördersystem nach Anspruch 32, dadurch **gekennzeichnet,** daß die Öffnung (53a) und/oder der Steg (59') eine langovale Form aufweisen.

34. Hängefördersystem nach einem der Ansprüche 28 bis 33, dadurch **gekennzeichnet,** daß Rastmittel (55, 56) vorgesehen sind, die den Zylinder (53) in jeder Betriebsstellung (I, II) lösbar festlegen.

35. Hängefördersystem nach einem der Ansprüche 29 bis 34, dadurch **gekennzeichnet,** daß die Ausnehmung (57, 66) kürzer ist als Zylinder (53), wobei die Spitze der Ausnehmung (57, 66) durch eine Einlaufnut (58, 68) verlängert wird.

36. Hängefördersystem nach einem der Ansprüche 29 bis 35, dadurch **gekennzeichnet,** daß die Ausnehmung (57) und der Abweiser (59) als gleichschenklige ähnliche Dreiecke ausgebildet sind, wobei die gleichschenkligen Seitenflächen schräg zur Laufrichtung verlaufen.

37. Hängefördersystem nach 4nspruch 36, dadurch **gekennzeichnet,** daß die Einlaufnut (58) die Form eines sich in Richtung auf die Mittellinie der Ausnehmung (57) verengenden, gleichschenkligen Dreiecks aufweist, wobei in jeder Betriebsstellung (I, II) eine der Seitenflächen der Einlaufnut (58) mit der zugeordneten, die Führungsnut (54) begrenzenden Seitenfläche des Abweisers (59) fluchtet.

38. Hängefördersystem nach einem der Ansprüche 29 bis 35, dadurch **gekennzeichnet,** daß die Ausnehmung (66) und der Abweiser (67) als rechtwinklige, ähnliche Dreiecke ausgebildet sind, wobei eine der rechtwinkligen Seitenflächen (66b, 67b) in Laufrichtung verläuft, so daß der Bügel (4) in einer der Betriebsstellungen (I oder II) in der ankommenden Position durchläuft und in der anderen Betriebsstellung (II oder I) verdreht wird.

39. Hängefördersystem nach den Ansprüchen 35 und 38, dadurch **gekennzeichnet**, daß die Einlaufnut (68) die Form eines sich in Richtung auf die Ausnehmung (66) verengenden gleichschenkligen Dreiecks aufweist, wobei eine der Seitenflächen der Einlaufnut (68) mit der nichtrechtwinklig verlaufenden Seitenfläche des Abweisers (67) fluchtet.

40. Hängefördersystem nach einem der Ansprüche 1 bis 39, dadurch **gekennzeichnet**, daß zum Drehen des Bügels (4) aus einer rechts- in eine linksabgehängte Position oder aus einer links- in eine rechtsabgehängte Position zwei Wechseleinrichtungen (9, 50) spiegelbildlich hintereinandergeschaltet sind, wobei die erste Wechseleinrichtung den Bügel (4) aus der rechts- bzw. linksabgehängten Position in eine mittenabgehängte Position und die zweite Wechseleinrichtung den Bügel (4) aus der mittenabgehängten Position in die links- bzw. rechtsabgehängte Position dreht.

41. Hängefördersystem nach einem der Ansprüche 38 und 39, dadurch **gekennzeichnet**, daß zum Drehen des Bügels (4) aus einer rechts- in eine linksabgehängte oder aus einer links- in eine rechtsabgehängte Position ein Zwischenführungsteil (69) in Laufrichtung hinter die Wechseleinrichtung (65) eingeschaltet ist, und daß das Zwischenführungsteil (69) zwei Verlängerungsnuten (70a, 70b, 70a') enthält, die eine Verlängerung der sich in der Wechseleinrichtung (65) öffnenden Führungsnuten (54) bilden.

42. Hängefördersystem nach Anspruch 41, dadurch **gekennzeichnet**, daß als Zwischenführungsteil (69) eine Wechseleinrichtung (65) verwendet wird, in der der Zylinder (53) unverdrehbar festgelegt ist und in der eine zusätzliche starre Verlängerungsnut (70a') vorgesehen ist, die eine Verlängerung der sich zwischen den winkligen Seitenflächen öffnenden Führungsnut (54) der Wechseleinrichtung (65) bildet.

43. Hängefördersystem nach Anspruch 42 dadurch **gekennzeichnet**, daß das Zwischenführungsteil (69) und die Wechseleinrichtung (65) identisch ausgebildet sind.

44. Hängefördersystem nach einem der Ansprüche 26 bis 43, dadurch **gekennzeichnet**, daß der Führungsstift (60) am Bügel (4) in der Mitte zwischen den Laufrollen (3a, 3b) angeordnet ist, und daß die Führungsnut (54) an der den Laufbahnen abgewandten Seite des Zylinders (53) angeordnet ist.

45. Hängefördersystem nach einem der Ansprüche 26 bis 44, dadurch **gekennzeichnet**, daß der Führungsstift (60) einen kreisförmigen Querschnitt aufweist.

46. Hängefördersystem nach einem der Ansprüche 26 bis 44, dadurch **gekennzeichnet**, daß der Führungsstift (60) einen ovalen Querschnitt aufweist, der mit seiner längeren Erstreckung parallel zur Laufrichtung angeordnet ist.

47. Hängefördersystem nach einem der Ansprüche 26 bis 46, dadurch **gekennzeichnet**, daß der Führungsstift (60) drehbar gelagert ist.

48. Hängefördersystem nach einem der Ansprüche 45 bis 47, dadurch **gekennzeichnet**, daß der Führungsstift (60) eine drehbare Ummantelung aufweist.

49. Hängefördersystem nach einem der Ansprüche 26 bis 48, dadurch **gekennzeichnet**, daß die Führungsnut (54) Begrenzungsflächen aus Kunststoff, insbesondere Polyamid, aufweist und der Führungsstift (60) aus Stahl besteht.

50. Hängefördersystem nach einem der Ansprüche 26 bis 48, dadurch **gekennzeichnet**, daß die Führungsnut (54) Begrenzungsflächen aus Metall bzw. einer Metallegierung, insbesondere Aluminium, aufweist und der Führungsstift (60) eine Kunststoffoberfläche, insbesondere aus Polyamid, enthält.

51. Hängefördersystem nach einem der Ansprüche 1 bis 50 dadurch **gekennzeichnet**, daß zum Halten des Bügels (4) in der links- oder rechtsabgehängten Position im Anschluß an die Zwangsführung (11, 54) eine Leiteinrichtung (7, 8, 7', 8' ) vorgesehen ist.

52. Hängefördersystem nach Anspruch 51, dadurch **gekennzeichnet**, daß die Leiteinrichtung jeweils in der links- oder rechtsabgehängten Position miteinander in Eingriff bringbare Anlageflächen (7a, 7a' , 27a, 27b) am Betriebsmittel (2) und an der Schiene (6, 6' ) aufweisen.

53. Hängefördersystem nach einem der Ansprüche 51 oder 52 dadurch **gekennzeichnet,** daß die Leiteinrichtung jeweils in der links- oder rechtsabgehängten Position miteinander in Eingriff bringbare Anlageflächen (7b, 7b' bzw. 8b, 8b') an der Schiene (6, 6') und an der das Gewicht des zu fördernden Gegenstandes aufnehmenden Laufrolle (3a bzw. 3b) aufweist.

54. Hängefördersystem nach einem der Ansprüche 51 bis 53 dadurch **gekennzeichnet,** daß eine Führung (Ba) für die zweite Laufrolle (3b) in der rechtsabgehängten Position und eine Führung (8a` für die erste Laufrolle (3a) in der ljnksabgehängten Position vorgesehen ist.

55. Hängeförersystem nach einem der Ansprüche 1 bis 54, dadurch **gekennzeichnet,** daß zwischen der Wechseleinrichtung (9, 50, 65) und einer Schiene für eine mittenabgehangte Position ein Adapter (71) vorgesehen ist, der eine Übergangs-Laufbahn (72) enthält.

56. Hängefördersystem nach einem der Ansprüche 3 bis 55 **gekennzeichnet** durch wenigstens eine zusätzliche Weiche (43).

57. Hängefördersystem nach Anspruch 56 dadurch **gekennzeichnet,** daß die als einstückiges Formteil ausgebildete Weiche (15) durch die zusätzliche Weiche (43) zu einer Drei-Wege-Weiche ergänzt wird.

58. Hängefördersystem nach Anspruch 57 dadurch **gekennzeichnet,** daß die zusätzliche Weiche ein Schienenstück (44) mit einer Laufbahn (44a) für eine seitenabgehängte Position enthält, das an die im Schienenweg (1) angeordnete Weiche (15) heranführbar ist und daß die Weiche (15) in dem dem Schienenstück (44) zugewandten Steg (18) eine Durchbruchstelle (48) aufweist, die durch ein Verschlußteil (49) zu öffnen und zu schließen ist.

59. Hängefordersystem nach Anspruch 58 dadurch **gekennzeichnet,** daß das Verschlußteil als schwenkbare Zunge (49) ausgebildet ist.

60. Hängefördersystem nach einem der Ansprüche 1 bis 59 dadurch **gekennzeichnet,** daß das Betriebsmittel (2) eine Führung (25) für ein Auf-hängeelement (26) zum Befestigen des zu fördernden Gegenstandesenthält, die sich zumindest über den Drehwinkel in beiden Betriebsstellungen der Wechseleinrichtung (9) erstreckt und durch die das Aufhängeelement (26) beim Verdrehen des Bügels (4) unter der Wirkung des Eigengewichtes des zu fördernden Gegenstandes selbsttätig geführt ist.

61. Hängefördersystem nach Anspruch 60 dadurch **gekennzeichnet,** daß die Führung (25) auf einer Kreisbahn um eine Achse angeordnet ist, die koaxial zur imaginären Drehachse (X) des Bügels (4) verläuft.

62. Hängefördersystem nach Anspruch 61 dadurch **gekennzeichnet,** daß die Führung (25) als Schlitz (25a, 25b) zum Eingriff eines Führungsbügels (26) ausgebildet ist.

63. Hängefördersystem nach Anspruch 61 dadurch **gekennzeichnet,** daß jeweils eine an beiden Seiten des Bügels (4) angeordnete Laufbahn (62a, 62b) für jeweils ein Rollrad (63a, 63b) vorgesehen ist.

64. Hängefördersystem nach einem der Ansprüche 26 bis 39 dadurch **gekennzeichnet,** daß die Führungsnut (54) an ihrem in der ersten Laufrichtung gesehen hinteren Ende in Verlängerung der Seitenfläche (57a, STD, 66a, 66b) der Ausnehmung (57, 66) eine Freischaltfläche (57c, STd, 66c, 66d) aufweist, die schräg zur Laufrichtung verläuft und bei geschlossener Führungsnut (54) mit der zugeordneten Seitenfläche des Abweisers (59, 67) einen Einlaufraum bildet, in den der in der zweiten Laufrichtung ankommende Führungsstift (60) eintritt und dadurch die Zylinder-hülse (53) so verdreht, daß die Führungsnut (5M) geöffnet wird.

65. Hängefördersystem nach einem der Ansprüche 1 bis 64 dadurch **gekennzeichnet,** daß im Schienenweg (1) eine starre Zwangsführung angeordnet ist, die den ankommenden Bügel (4) in eine vorher festgelegte Abhängungsposition (R, M, L) verdreht.

66. Betriebsmittel mit einer ersten und einer zweiten, durch einen offenen Bügel miteinander verbundenen Laufrolle und einer Aufhängevorrichtung für zu transportierende Gegenstände, für ein Hängefördersvstem, insbesondere nach einem der Ansprüche 1 bis 31 dadurch **gekennzeichnet,** daß die Aufhängevorrichtung (26) in einer am Bügel (4) angeordneten Führung (25) geführt ist.

67. Betriebsmittel nach Anspruch 66, dadurch **gekennzeichnet,** daß sich die Führung (25) im wesentlichen über einen Teil einer Kreisbahn erstreckt.

68. Betriebsmittel nach einem der Ansprüche 66 oder 67 dadurch **gekennzeichnet,** daß die Führung (25) eine Gleitführung ist.

**69.** Betriebsmittel nach Anspruch 68 dadurch **gekennzeichnet,** daß die Aufhängevorrichtung (26) zumindest einen Stift (26a, 26b) enthält, der in mindestens einem Schlitz (25a, 25b) im Bügel (4) gleitend geführt ist.

**70.** Betriebsmittel nach einem der Ansprüche 66 oder 67 dadurch **gekennzeichnet,** daß je eine an beiden Seiten des Bügels (U) angeordnete Rollbahn (62a, 62b) für mindestens je ein Rollrad (63a, 63b) einer Rollaufhängung (64) vorgesehen ist.

**Claims**

1. Suspended conveyor system for the transport of goods along a rail track (1) comprising a track (5a, 5b, 6a, 6a') arranged along a rail (5, 6, 6') for an operating means (2) including a first and a second runner (3a, 3b), which are connected to one another by an open yoke (4) which partially reaches around the rail, whereby the rollers are arranged for rolling on the track whilst carrying the weight of the transported goods, **characterised in that** the rail track accommodates at least two of the following rails:
    a) rail (5) with divided dual track (5a, 5b) for a centrally suspended position (M) of the operating means (2);
    b) rail (6) with at least one track (6a) for the first runner (3a) in a righthand suspended position (R) of the operating means (2); and
    c) rail (6') with at least one track (6a') for the second roller (3b) in a lefthand suspended position (L) of the operating means (2); and that a change-over device (9, 50, 65) is provided with a positive guide (11, 54) which is movable into a first and into a second operating position (I, II) for the operating means in such a manner that the yoke (4) in a first direction of travel, after passing the positive guide (11, 54), is placed in the second operating position (11) of a further suspended position (L, M, R) which differs from the first one.

2. Suspended conveyor system according to claim 1, **characterised in that** the yoke (4), after passing through the positive guide (11, 54) in a second direction of travel, which is opposite that of the first direction of travel, is again in the initial suspended position (M, R, L).

3. Suspended conveyor system according to one of claims 1 or 2, **characterised in that** the change-over device (9, 50, 65) is placed in front of a branch (17) wherein an approaching rail branches into at least two departing rails, and in that a guiding means (18, 19) is provided which extends from the change-over device (9, 50, 65) to beyond the branch (17).

4. Suspended conveyor system according to claim 3, **characterised in that** the branch (17) is arranged on points (15), whereby the points (15) are a one-piece formed member with one track each continuing towards the right and the left and fixed at the branch (17) in its relative position.

5. Suspended conveyor system according to claim 4, **characterised in that** the tracks (16, 16a, 16b) extend in the area of the points (15) substantially horizontally and are passed through by the operating means (2) in a laterally suspended position, in which the yoke (4) laterally reaches around the rail to the left or the right, and in which only one of the rollers (3a, 3gb) rolls along the track (16, 16a, 16b).

6. Suspended conveyor system according to one of claims 3 to 5, **characterised in that** the approaching rail, which is arranged between the change-over device (9, 50, 65) and the branch (17), is connected in one piece with its track (16) to the departing rails (16a or 16b respectively).

7. Suspended conveyor system according to one of claims 3 to 6, **characterised in that** the guiding means (18, 19) has a right or a left abutment surface (18a, 19a) on the right or the left outside respectively of the points (15), which each abut against a corresponding abutment surface (27a, 27b) at the yoke (4) in the righthand or lefthand suspended position.

8. Suspended conveyor system according to one of claims 3 to 7, **characterised in that** the guiding means (18, 19) comprises a righthand or lefthand abutment surface (18b, 19b) respectively on each of the webs (18, 19) which define the tracks (16, 16a, 16b) towards the right or the left respectively, and each a corresponding abutment surface relative to the first and the second runner (3a, 3b).

9. Suspended conveyor system according to one of claims 4 to 8, **characterised in that** the points are provided with a take-off location for the operating means (2) in the right hand-and/or left hand suspended position, in which respect the thicknessa of the points (15) is less than the clearance between the rollers (3a, 3b).

10. Suspended conveyor system according to one of claims 3 to 9, **characterised in that** a second change-over device (9, 50, 65) is arranged in the departing track (16a, 16b).

11. Suspended conveyor system according to one of claims 1 to 10, **characterised in that** rails (5, 6, 6') for centrally suspended, lefthand suspended and righthand suspended positions are provided in the rail track (1).

12. Suspended conveyor system according to one of claims 1 to 11, **characterised in that** the two tracks (5a, 5b) of the rail (5), which are each associated with a roller (3a, 3b), are pitched for the centrally suspended position at an angle of approximately 45° relative to the vertical, and the tracks (6a, 6a') of the righthand or lefthand suspended positions respectively extend substantially horizontally.

13. Suspended conveyor system according to one of claims 1 to 12, **characterised in that** the positive guide (11, 54) is arranged in such a manner that an operating means (2) which arrives at the change-over device (9, 50) in a centrally suspended position, is rotated in the first operating position (I) into a righthand suspended position, or in the second operating position (II) into a lefthand suspended position.

14. Suspended conveyor system according to one of claims 1 to 13, **characterised in that** the change-over device (9) is arranged in the rail track (1) and comprises a positive guide (11) for at least one roller (3).

15. Suspended conveyor system according to one of claims 1 to 14, **characterised in that** the positive guide (11) of the change-over device (9) comprises a right and a left contact track (13, 14), which is pivotable around a substantially vertical pivoting axis (12).

16. Suspended conveyor system according to claim 15, **characterised in that** in the first operating position (1) the left contact track (14) forms a stop for the second roller (3b) arriving in the centrally suspended position, whilst the right contact track (13) serves as a stop for the first runner (3a) during the turning of the yoke (4) into the righthand suspended position, and whereby in the second operating position (II) the right contact track (13) forms a stop for the first runner (3a) approaching in the centrally suspended position, whilst the left contact track (4) forms a stop for the second roller (3b) during the turning of the yoke (4) into the lefthand suspended position.

17. Suspended conveyor system according to one of claims 14 to 16, **characterised in that** the left contact track (14) forms a stop for the approaching lefthand suspended second roller (3b) during the transition from the lefthand suspended position to the centrally suspended position in the second operating position (II), whilst the right contact track (13) serves as a stop for the first roller (3a) during the turning of the yoke (4), and that the right contact track (13) forms a stop for the approaching righthand suspended first roller (3a) during the transition from the righthand suspended into the centrally suspended position in the first operating position (I), whilst the left contact track (14) serves as a stop for the second roller (3b) during the turning of the yoke (4).

18. Suspended conveyor system according to one of claims 14 to 17, **characterised in that** the distance between the contact tracks (13, 14) increases in the direction away from the pivoting axis (12).

19. Suspended conveyor system according to one of claims 14 to 18, **characterised in that** the contact tracks are constructed to be contact surfaces (13, 14).

20. Suspended conveyor system according to one of claims 14 to 18, **characterised in that** the contact tracks are linearly arranged on two bars interconnected V-shapedly.

21. Suspended conveyor system according to one of claims 14 to 20, **characterised in that** the track in the area of the positive guide (11) is arranged to be part of a peripheral surface of a cylinder (10), the cylinder axis of which extends parallel to the direction of travel of the operating means (2).

22. Suspended conveyor system according to claim 21, **characterised in that** the cylinder (10c) is rotatably mounted.

23. Suspended conveyor system according to one of claims 14 to 22, **characterised in that** an operating lever (37) for the positive guide (11) is provided, comprising a left and a right guide edge (40a, 40b), each co-operating with a left and a right guide edge (24a, 24b) at the yoke (4), whereby the operating lever (37) is pivotable, by engaging the guide edges (24, 40), into the respective required first or second operating position for passing through the change-over device (9) whilst taking along the positive guide 11.

24. Suspended conveyor system according to claim 23, **characterised in that** the operating lever (37) is pivotable around a spatially fixed axis (41), which is arranged parallel to the pivoting axis (12) of the positive guide (11), and that it is connected to the positive guide via a spring-loaded rotary slide mount (32, 33, 34, 35), in which respect the rotary slide mount (32, 33, 34, 35) comprises a first and second rest position in which the positive guide (11) is pivoted into a first and second operating position (I and II).

25. Suspended conveyor system according to one of claims 23 or 24, **characterised in that** the left and the right guide edge (40a, 40b) are each arranged at a fork-shaped extension (40) of the operating lever (37).

26. Suspended conveyor system according to one of claims 1 to 13, **characterised in that** the change-over device (50, 65) is arranged in the rail track (1), comprising a positive guide (54) for a guide pin (60), which is arranged at the yoke (4).

27. Suspended conveyor system according to claim 26, **characterised in that** the positive guide is arranged to be a guide groove (54).

28. Suspended conveyor system according to claim 27, **characterised in that** the guide groove (54) is formed in a cylinder, which is rotatable in the turning direction of the yoke (4).

29. Suspended conveyor system according to claim 28, **characterised in that** a recess (57, 66) is provided, which broadens in the first direction of travel of the operating means (2), and that a rejector (59, 67) is mounted to be rotatably secure inside the recess (57, 66), in which respect the rejector (59, 67) has a triangular shape, which is geometrically similar to the recess (57, 66), with a breadth reduced by at least the breadth of the guide groove (54), so that one each guide groove (54) between the lateral surfaces, which are parallel to each other, of the recess (57, 66) and the rejector (59, 67) opens during the turning of the cylinder (53) into the first or second operating position (I, II).

30. Suspended conveyor system according to one of claims 28 or 29, **characterised in that** the cylinder is arranged to be a cylinder sleeve (53), placed to be rotatable around a core (51), which is rotatably secured in the rail track (1).

31. Suspended conveyor system according to claim 30, **characterised in that** the rejector (59, 67) is connected to the core (51) in a rotatably secure manner.

32. Suspended conveyor system according to claim 31, **characterised in that** the rejector (59, 67) comprises a web (59') which extends through an opening (53a) in the cylinder sleeve (53), which opening is of larger breadth than the web (59'), and which is connected to the core (51).

33. Suspended conveyor system according to claim 32, **characterised in that** the opening (53a) and/or the web (59') are of elongate oval shape.

34. Suspended conveyor system according to one of claims 28 to 33, **characterised in that** raster means (55, 56) are provided which releasably fix the cylinder (53) in every operating position (I, II).

35. Suspended conveyor system according to one of claims 29 to 34, **characterised in that** the recess (57, 66) is shorter than the cylinder (53), whereby the tip of the recess (57, 66) is extended by means of an entry groove (58, 68).

36. Suspended conveyor system according to one of claims 29 to 35, **characterised in that** the recess (57) and the rejector (59) are constructed as isosceles or similar triangles, with the isoscele lateral surfaces extending transversely to the direction of travel.

37. Suspended conveyor system according to claim 36, **characterised in that** the entry groove (58) has the shape of an isosceles triangle which narrows towards the middle line of the recess (57), in which respect one of the lateral surfaces of the entry groove (58) is flush with the associated lateral surface of the rejector (59) which defines the guide groove (54), in any operating position (I, II).

38. Suspended conveyor system according to one of claims 29 to 35, **characterised in that** the recess (66) and the rejector (67) are rightangled, similar triangles, with one of the rightangled lateral surfaces (66b, 67b) extending in the direction of travel, so that in one of the operating positions (I or II) the yoke (4) passes through in the approaching position, and is turned in the other operating position (II or I).

39. Suspended conveyor system according to claims 35 and 38, **characterised in that** the entry groove (68) has the form of an isosceles triangle which narrows in the direction of the recess (66), in which respect one of the lateral surfaces of the entry groove (68) is flush with the non-rightangled extending lateral surface of the rejector (67).

40. Suspended conveyor system according to one of claims 1 to 33, **characterised in that**, for the purpose of turning the yoke (4) from a righthand suspended position into a lefthand one or from a lefthand suspended position into a right hand one, two change-over devices (9, 50) are arranged mirror-symmetrically one behind the other, whereby the first change-over device turns the yoke (4) from the righthand or lefthand suspended position into a centrally suspended position, and the second change-over device turns the yoke (4) from the centrally suspended position into the lefthand or the righthand suspended position.

41. Suspended conveyor system according to one of claims 38 and 39, **characterised in that** an intermediate guide means (69) is arranged behind the change-over device (65), as seen in the direction of travel, for the purpose of turning the yoke (4) from a righthand into a lefthand suspended position or from a lefthand into a righthand suspended position, and that the intermediate guide member (69) comprises two extension grooves (70a, 70b, 70a'), forming an extension of the guide grooves (54) which open in the direction of the change-over device.

42. Suspended conveyor system according to claim 41, **characterised in that** the intermediate guide member (69) is a change-over device (65) in which the cylinder (53) is mounted to be rotatably secure and in which is provided an additional rigid extension groove (70a') which forms an extension of the guide groove (54) of the change-over device (65), which groove opens between the angled lateral surfaces.

43. Suspended conveyor system according to claim 42, **characterised in that** the intermediate guide member (690 and the change-over device (65) are constructed to be identical.

44. Suspended conveyor system according to one of claims 26 to 43, **characterised in that** the guide pin (60) is arranged at the yoke (4) in the middle between the rollers (3a, 3b), and that the guide groove (54) is arranged at the side, which faces away from the tracks, of the cylinder (53).

45. Suspended conveyor system according to one of claims 26 to 44, **characterised in that** the guide pin (60) has a circular cross-section.

46. Suspended conveyor system according to one of claims 26 to 44, **characterised in that** the guide pin (60) has an oblong cross-section, the longer extension of which is arranged parallel to the direction of travel.

47. Suspended conveyor system according to one of claims 26 to 46, **characterised in that** the guide pin (60) is mounted to be rotatable.

48. Suspended conveyor system according to one of claims 45 to 47, **characterised in that** the guide pin (60) has a rotatable encasement.

49. Suspended conveyor system according to one of claims 26 to 48, **characterised in that** the guide groove (54) consists of defining surfaces of synthetic material, in particular polyamid, and that the guide pin (60) is made of steel.

50. Suspended conveyor system according to one of claims 26 to 48, **characterised in that** the guide groove (54) has defining surfaces of metal or a metal alloy, in particular aluminium, and that the guide pin (60) comprises a synthetic-material surface, in particular of polyamid.

51. Suspended conveyor system according to one of claims 1 to 50, **characterised in that** a guiding means is provided for holding the yoke (4) in the lefthand or righthand suspended position following the positive guide (11, 54).

52. Suspended conveyor system according to claim 51, **characterised in that** the guiding means comprises abutment surfaces (7a, 7a', 27a, 27b) at the operating means (2) and at the rail (6, 6'), which surfaces engage into one another in the respective lefthand or righthand suspended position.

53. Suspended conveyor system according to one of claims 51 or 52, **characterised in that** the guiding means comprises abutment surfaces (7b, 7b' or 8b, 8b' respectively) at the rail (6, 6') and at the roller (3a or 3b respectively) accommodating the weight of the item to be conveyed, which surfaces engage one another in the respective lefthand or righthand suspended position.

54. Suspended conveyor system according to one of claims 51 to 53, **characterised in that** a guide (8a) for the second roller (3b) in the righthand suspended position, and a guide (8a') for the first roller (3a) in the lefthand suspended position is provided.

55. Suspended conveyor system according to one of claims 1 to 54, **characterised in that** an adapter (71) is provided between the change-over device (9, 50, 65) and a rail for a centrally suspended position, which adapter includes a transitional track (72).

56. Suspended conveyor system according to one of claims 3 to 55, **characterised by** at least one additional set of points (43).

57. Suspended conveyor system according to claim 56, **characterised in that** the points, which are a one-piece formed unit, are extended by additional points (43) into three-way-points.

58. Suspended conveyor system according to claim 57, **characterised in that** the additional points comprise a rail section (44) including a track (44a) for a laterally suspended position, which is guided to the points (15) in the rail track (1), and that the points (15) have a passage (48), which is opened and closed by a closing member (49).

59. Suspended conveyor system according to claim 58, **characterised in that** the closing member (49) is a pivotable tongue (49).

60. Suspended conveyor system according to one of claims 1 to 53, **characterised in that** the operating means (2) comprises a guide (25) for a suspension element (26) for attaching the item to be conveyed, which guide extends at least over the angle of rotation in both operating positions of the change-over device (9) and through which the suspension element (26) is self-guiding under the effect of the weight of the item to be conveyed whilst turning the yoke (4).

61. Suspended conveyor system according to claim 60, **characterised in that** the guide (25) is arranged on a circular track around an axis which extends coaxially to the imaginary axis of rotation (x) of the yoke (4).

62. Suspended conveyor system according to claim 61, **characterised in that** the guide (25) is arranged to be a slot (25a, 25b) for engaging a guide yoke (26).

63. Suspended conveyor system according to claim 61, **characterised in that** one track (62a, 62b), arranged on both sides of the yoke (4), is provided for each roller (63a, 63b).

64. Suspended conveyor system according to one of claims 26 to 39, **characterised in that** the guide groove (54) has a free-selector surface (57c, 57d, 66c, 66d) at its rear end, as seen in the first direction of travel, in extension to the lateral surface (57a, 57b, 66a, 66b) of the recess (57, 66), free-selector surface extends transversely to the direction of travel and which forms, with the guide groove (54) closed, an entry area with the associated lateral surface of the rejector (59, 67), into which entry area enters the guide pin (60) approaching in the second direction of travel, thereby turning the cylinder sleeve (53) in such a manner that the guide groove (54) is opened.

65. Suspended conveyor system according to one of claims 1 to 64, **characterised in that** a rigid positive guide is arranged in the rail track (1), turning the approaching yoke (4) into a pre-determined suspended position (R,. M, L).

66. Operating means comprising a first and a second roller, which are interconnected by an open yoke, and a suspension device for items to be transported, for a suspension conveyor system, in particular according to claims 1 to 31, **characterised in that** the suspension device (26) is guided in a guide (25) arranged at the yoke (4).

67. Operating means according to claim 66, **characterised in that** the guide (25) extends substantially over a part of a circular path.

68. Operating means according to one of claims 66 or 67, **characterised in that** the guide (25) is a sliding guide.

69. Operating means according to claim 68, **characterised in that** the suspension device (26) comprises at least one pin (26a, 26b) which is slidingly guided in at least one slot (25a, 25b) in the yoke (4).

70. Operating means according to one of claims 66 and 67, **characterised in that** one each roller track (62a, 62b), arranged on both sides of the yoke (4), is provided for at least one each roller (63a, 63b) of a roller suspension (64).

**Revendications**

1. Système de convoyeur aérien pour le transport d'objets le long d'une voie de rails (1), comprenant une voie de roulement (5a, 5b, 6a, 6a') disposée sur un rail (5, 6, 6') et destinée à un moyen de transport (2) lequel comporte un premier et un second galet de roulement (3a, 3b) réunis par un étrier (4) qui enveloppe en partie le rail, les galets de roulement étant conformés pour rouler sur la voie de roulement, avec absorption du poids des objets à transporter,
caractérisé en ce que la voie de rails (1) comprend au moins deux des rails suivants :
   a) Rail (5) avec une voie de roulement (5a, 5b) divisée en deux pour une position de suspension centrale (M) du moyen de transport (2),
   b) Rail (6) avec au moins une voie de roulement (6a) pour le premier galet de roulement (3a) dans une position de suspension droite (R) du moyen de transport (2) et
   c) Rail (6') avec au moins une voie de roulement (6a') pour le second galet de roulement (3b) dans une position de suspension gauche (L) du moyen de transport (2), et
qu'il est prévu un dispositif de changement (9, 50, 65) avec un guidage forcé (11, 54) pour le moyen de transport (2), qui peut être amené dans une première et dans une seconde positions de fonctionnement (I, II) de telle façon que, dans une première direction de marche, l'étrier (4) ayant passé le guidage forcé (11, 54) placé dans la seconde position de fonctionnement (II), se trouve dans une position de suspension (L, M, R) différente de la première position de suspension.

2. Système de convoyeur aérien selon la revendication 1, caractérisé en ce que, après le passage du guidage forcé (11, 54) placé dans une seconde direction de marche opposée à la première, l'étrier (4) se trouve à nouveau dans la position de suspension (M, R, L) initiale.

3. Système de convoyeur aérien selon l'une des revendications 1 ou 2, caractérisé en ce que le dispositif de changement (9, 50, 65) est installé en amont d'un point d'embranchement (17) où un rail arrivant se ramifie en au moins deux rails partants, et qu'il est prévu un dispositif directeur (18, 19) qui s'étend du dispositif de changement (9, 50, 65) jusqu'au-delà du point d'embranchement (17).

4. Système de convoyeur aérien selon la revendication 3, caractérisé en ce que le point d'embranchement (17) se situe sur une aiguille (15), ladite aiguille (15) étant conformée en pièce profilée d'un seul tenant et présentant respectivement une voie de roulement partant à droite et à gauche (16a, 16b) dont les positions relatives au point d'embranchement (17) sont prédéterminées.

5. Système de convoyeur aérien selon la revendication 4, caractérisé en ce que les voies de roulement (16, 16a, 16b) s'étendent sensiblement horizontalement dans la région de l'aiguille (15) et qu'elles sont franchies par le moyen de transport (2) dans une position de suspension latérale dans laquelle l'étrier (4) enveloppe le rail latéralement à partir de la gauche ou de la droite et dans laquelle un seul galet de roulement (3a, 3b) roule sur la voie de roulement (16, 16a, 16b).

6. Système de convoyeur aérien selon l'une des revendications 3 à 5, caractérisé en ce que le rail arrivant disposé entre le dispositif de changement (9, 50, 65) et le point d'embranchement (17) est réuni, avec sa voie de roulement (16), en une seule pièce avec les voies de roulement partantes (16a et respectivement 16b).

7. Système de convoyeur aérien selon l'une des revendications 3 à 6, caractérisé en ce que le dispositif directeur (18, 19) présente respectivement une surface de contact droite et gauche (18a, 19a) sur la face extérieure droite et respectivement gauche de l'aiguille (15) qui est respectivement appliquée contre une surface de contact correspondante (27a, 27b) sur l'étrier (4) en position de suspension droite ou gauche.

8. Système de convoyeur aérien selon l'une des revendications 3 à 7, caractérisé en ce que le dispositif directeur (18, 19) comprend respectivement une surface de contact droite et gauche (18b, 19b) sur respectivement une nervure (18, 19) qui délimite les voies de roulement (16, 16a, 16b) à droite et respectivement à gauche, et respectivement une surface de contact correspondante sur les premier et second galet de roulement (3a, 3b).

9. Système de convoyeur aérien selon l'une des revendications 4 à 8, caractérisé en ce que dans l'aiguille (15) est prévu un point de retrait pour le moyen de transport (2) en position de suspension droite et/ou gauche où l'épaisseur de l'aiguille (15) est inférieure à l'écartement entre les galets de roulement (3a, 3b).

10. Système de convoyeur aérien selon l'une des revendications 3 à 9, caractérisé en ce qu'un second dispositif de changement (9, 50, 65) est installé dans la voie de roulement partante (16a, 16b).

11. Système de convoyeur aérien selon l'une des revendications 1 à 10, caractérisé en ce que la voie de rails (1) comprend des rails (5, 6, 6') pour des positions de suspension centrale, gauche et droite.

12. Système de convoyeur aérien selon l'une des revendications 1 à 11, caractérisé en ce que les deux voies de roulement (5a, 5b) du rail (5) pour la position de suspension centrale affectées chacune à un galet de roulement (3a, 3b) sont inclinées d'un angle d'environ 45° par rapport à la verticale, et que les voies de roulement (6a, 6a') s'étendent sensiblement horizontalement pour la position de suspension droite et respectivement gauche.

13. Système de convoyeur aérien selon l'une des revendications 1 à 12, caractérisé en ce que le guidage forcé (11, 54) est disposé de façon qu'un moyen de transport (2) arrivant au dispositif de changement (9, 50) dans une position de suspension centrale est tourné dans une première position de fonctionnement (I) dans une position de suspension droite ou, dans une seconde position de fonctionnement (II) dans une position de suspension gauche.

14. Système de convoyeur aérien selon l'une des revendications 1 à 13, caractérisé en ce que le dispositif de changement (9) est installé dans la voie de rails (1) et comprend un guidage forcé (11) pour au moins un galet de roulement (3).

15. Système de convoyeur aérien selon l'une des revendications 1 à 14, caractérisé en ce que le guidage forcé (11) du dispositif de changement (9) comprend des voies d'arrêt droite et gauche (13, 14) orientables autour d'un axe de pivotement (12) sensiblement vertical.

16. Système de convoyeur aérien selon la revendication 15, caractérisé en ce que dans la première position de fonctionnement (I) la voie d'arrêt gauche (14) forme une butée pour le second galet de roulement (3b) arrivant dans la position de suspension centrale, tandis que la voie d'arrêt droite (13) sert de butée pour le premier galet de roulement (3a) pendant la rotation de l'étrier (4) dans la position de suspension droite, et que, dans la seconde position de fonctionnement (II), la voie d'arrêt droite (13) forme une butée pour le premier galet de roulement (3a) arrivant dans la position de suspension centrale, tandis que la voie d'arrêt gauche (14) forme une butée pour le second galet de roulement (3b) pendant la rotation de l'étrier (4) dans la position de suspension gauche.

17. Système de convoyeur aérien selon l'une des revendications 14 à 16, caractérisé en ce que, lors du passage de la position de suspension gauche à la position de suspension centrale, dans la position de fonctionnement (II), la voie d'arrêt gauche (14) forme une butée pour le second galet de roulement (3b) arrivant dans la position de suspension gauche, tandis que la voie d'arrêt droite (13) sert de butée pour le premier galet de roulement (3a) pendant la rotation de l'étrier (4); et que, lors du passage de la position de suspension droite à la position de suspension centrale, dans la première position de fonctionnement (I), la voie d'arrêt droite (13) forme une butée pour le premier galet de roulement (3a) arrivant dans la position de suspension droite, tandis que la voie d'arrêt gauche (14) sert de butée pour le second galet de roulement (3b) pendant la rotation de l'étrier (4).

18. Système de convoyeur aérien selon l'une des revendications 14 à 17, caractérisé en ce que l'écartement des voies d'arrêt (13, 14) augmente dans le sens opposé à l'axe de pivotement (12).

19. Système de convoyeur aérien selon l'une des revendications 14 à 18, caractérisé en ce que les voies d'arrêt sont conformées en surfaces d'arrêt (13, 14).

20. Système de convoyeur aérien selon l'une des revendications 14 à 18, caractérisé en ce que les voies d'arrêt présentent une forme linéaire sur deux barres reliées en V.

21. Système de convoyeur aérien selon l'une des revendications 14 à 20, caractérisé en ce que la voie de roulement est conformée, dans la région du guidage forcé (11), en tant que partie d'une surface circonférentielle d'un cylindre (10) dont l'axe s'étend parallèlement à la direction de marche du moyen de transport (2).

22. Système de convoyeur aérien selon la revendication 21, caractérisé en ce que le cylindre (10c) est monté de manière tournante.

23. Système de convoyeur aérien selon l'une des revendications 14 à 22, caractérisé en ce qu'il comprend pour le guidage forcé (11) un levier de manoeuvre (37) qui présente des arêtes de commande gauche et droite (40a, 40b) qui coopèrent respectivement avec des arêtes de commande gauche et droite (24a, 24b) sur l'étrier (4), la mise en prise des arêtes de commande (24, 40) permettant; avec entraînement du guidage forcé (11), de faire pivoter le levier de manoeuvre (37) dans la première ou dans la seconde position de fonctionnement respectivement nécessaire pour le franchissement du dispositif de changement (9).

24. Système de convoyeur aérien selon la revendication 23, caractérisé en ce que le levier de manoeuvre (37) peut pivoter autour d'un axe fixe (41) disposé parallèlement à l'axe de pivotement (12) du guidage forcé (11) et qu'il est relié audit guidage forcé (11) par l'intermédiaire d'un palier à tiroir rotatif à ressort (32, 33, 34, 35) , ledit palier à tiroir rotatif (32, 33, 34, 35) présentant une première et une seconde positions de crantage dans lesquelles le guidage forcé (11) est pivoté dans une première et une seconde positions de fonctionnement (I et II).

25. Système de convoyeur aérien selon l'une des revendications 23 ou 24, caractérisé en ce que les arêtes de commande gauche et droite (40a, 40b) sont respectivement conformées sur un prolongement (40) en forme de fourche du levier de manoeuvre (37).

26. Système de convoyeur aérien selon l'une des revendications 1 à 13, caractérisé en ce que le dispositif de changement (50, 65) est installé dans la voie de rails (1) et comprend un guidage forcé (54) pour une broche de guidage (60) disposée sur l'étrier (4).

27. Système de convoyeur aérien selon la revendication 26, caractérisé en ce que le guidage forcé est conformé en rainure de guidage (54).

28. Système de convoyeur aérien selon la revendication 27, caractérisé en ce que la rainure de guidage (54) est conformée dans un cylindre (53) pouvant être tourné dans le sens de rotation de l'étrier (4).

29. Système de convoyeur aérien selon la revendication 28, caractérisé en ce que dans le cylindre (53) est prévu un évidement (57, 66) qui s'élargit dans la première direction de marche du moyen de transport (2); et qu'un déflecteur (59, 67) est fixé de manière non tournante à l'intérieur de l'évidement (57, 66), le déflecteur (59, 67) présentant une forme triangulaire qui ressemble géométriquement à celle de l'évidement (57, 66), avec une largeur diminuée d'au moins la largeur de la rainure de guidage (54), de sorte que, lors de la rotation du cylindre (53) dans la première ou la seconde position de fonctionnement (I, II), une rainure de guidage (54) s'ouvre respectivement entre les surfaces latérales de l'évidement (57, 66) et du déflecteur (59, 67) orientées parallèlement les unes par rapport aux autres.

30. Système de convoyeur aérien selon l'une des revendications 28 ou 29, caractérisé en ce que le cylindre est conformé en douille cylindrique (53) qui est montée de façon à pouvoir tourner autour d'un noyau (51) placé de manière non tournante dans la voie de rails (1).

31. Système de convoyeur aérien selon la revendication 30, caractérisé en ce que le déflecteur (59, 67) est rattaché de manière non tournante au noyau (51).

32. Système de convoyeur aérien selon la revendication 31, caractérisé en ce que le déflecteur (59, 67) comprend une nervure (59') qui s'étend au travers d'une ouverture (53a) dans la douille cylindrique (53), dont la largeur est supérieure à celle de ladite nervure (59'), et qui est rattachée au noyau (51).

33. Système de convoyeur aérien selon la revendication 32, caractérisé en ce que l'ouverture (53a) et/ou la nervure (59') présentent une forme ovale allongée.

34. Système de convoyeur aérien selon l'une des revendications 28 à 33, caractérisé en ce qu'il comprend des moyens d'arrêt (55, 56) qui bloquent le cylindre (53) de manière amovible dans chacune des positions de fonctionnement (I, II).

35. Système de convoyeur aérien selon l'une des revendications 29 à 34, caractérisé en ce que l'évidement (57, 66) est plus court que le cylindre (53), la pointe de l'évidement (57, 66) étant prolongée par une rainure d'entrée (58, 68).

36. Système de convoyeur aérien selon l'une des revendications 29 à 35, caractérisé en ce que l'évidement (57) et le déflecteur (59) sont conformés en triangles isocèles similaires, les côtés égaux étant orientés en oblique par rapport à la direction de marche.

37. Système de convoyeur aérien selon la revendication 36, caractérisé en ce que la rainure d'entrée (58) présente la forme d'un triangle isocèle se rétrécissant en direction de la ligne médiane de l'évidement (57), dans chaque position de fonctionnement (I, II) l'une des surfaces latérales de la rainure d'entrée (58) étant alignée avec la surface latérale associée du déflecteur (59) qui délimite la rainure de guidage (54).

38. Système de convoyeur aérien selon l'une des revendications 29 à 35, caractérisé en ce que l'évidement (66) et le déflecteur (67) sont conformés en triangles rectangles similaires, l'une des surfaces latérales orthogonales (66b, 67b) s'étendant dans la direction de marche de sorte que l'étrier (4) passe, dans l'une des positions de fonctionnement (I ou II), dans la position d'arrivée et est tourné dans l'autre position de fonctionnement (II ou I).

39. Système de convoyeur aérien selon les revendications 35 et 38, caractérisé en ce que la rainure d'entrée (68) présente la forme d'un triangle isocèle se rétrécissant en direction de l'évidement (66), l'une des surfaces latérales de la rainure d'entrée (68) étant alignée avec la surface latérale du déflecteur (67) dont l'orientation n'est pas orthogonale.

40. Système de convoyeur aérien selon l'une des revendicatons 1 à 39, caractérisé en ce que, pour la rotation de l'étrier (4) d'une position de suspension droite dans une position de suspension gauche ou d'une position de suspension gauche dans une position de suspension droite, deux dispositifs de changement (9, 50) sont installés en image de miroir l'un derrière l'autre, le premier dispositif de changement tournant l'étrier (4) de la position de suspension droite et respectivement gauche dans une position de suspension centrale et le second dispositif de changement faisant pivoter l'étrier (4) de la position de suspension centrale dans la position de suspension gauche et respectivement droite.

41. Système de convoyeur aérien selon l'une des revendications 38 et 39, caractérisé en ce que, pour la rotation de l'étrier (4) d'une position de suspension droite dans une position de suspension gauche ou d'une position de suspension gauche dans une position de suspension droite, un élément de guidage intermédiaire (69) est inséré dans la direction de marche en aval du dispositif de changement (65), et que l'élément de guidage intermédiaire (69) comprend deux rainures de prolongement (70a, 70b, 70a') qui forment un prolongement des rainures de guidage (54) s'ouvrant dans le dispositif de changement (65).

42. Système de convoyeur aérien selon la revendication 41, caractérisé en ce qu'il utilise comme élément de guidage intermédiaire (69) un dispositif de changement (65) dans lequel le cylindre (53) est monté de manière rigide en rotation et dans lequel est prévue une rainure de prolongement rigide supplémentaire (70a') qui forme un prolongement de la rainure de guidage (54) du dispositif de changement (65) qui s'ouvre entre les surfaces latérales anguleuses.

43. Système de convoyeur aérien selon la revendication 42, caractérisé en ce que l'élément de guidage intermédiaire (69) et le dispositif de changement (65) sont conformés de manière identique.

44. Système de convoyeur aérien selon l'une des revendications 26 à 43, caractérisé en ce que la broche de guidage (60) sur l'étrier (4) est disposée au milieu entre les galets de roulement (3a, 3b), et que la rainure de guidage (54) est disposée du côté du cylindre (53) opposé aux voies de roulement.

45. Système de convoyeur aérien selon l'une des revendications 26 à 44, caractérisé en ce que la broche de guidage (60) présente une section transversale circulaire.

46. Système de convoyeur aérien selon l'une des revendications 26 à 44, caractérisé en ce que la broche de guidage (60) présente une section transversale ovale dont l'extension plus longue est orientée parallèlement à la direction de marche.

47. Système de convoyeur aérien selon l'une des revendications 26 à 46, caractérisé en ce que la broche de guidage (60) est montée de façon à pouvoir tourner.

48. Système de convoyeur aérien selon l'une des revendications 45 à 47, caractérisé en ce que la broche de guidage (60) comprend une gaine tournante.

49. Système de convoyeur aérien selon l'une des revendications 26 à 48, caractérisé en ce que la rainure de guidage (54) présente des surfaces périphériques en matière plastique, en particulier en polyamide, et que la broche de guidage (60) est réalisée en acier.

50. Système de convoyeur aérien selon l'une des revendications 26 à 48, caractérisé en ce que la rainure de guidage (54) présente des surfaces périphériques en métal et respectivement en un alliage métallique, en particulier en aluminium, et que la broche de guidage (60) comporte une surface en matière plastique, en particulier en polyamide.

51. Système de convoyeur aérien selon l'une des revendications 1 à 50, caractérisé en ce que, pour maintenir l'étrier (4) dans la position de suspension gauche ou droite, un dispositif directeur (7, 8, 7', 8') est prévu à la suite du guidage forcé (11, 54).

52. Système de convoyeur aérien selon la revendication 51, caractérisé en ce que le dispositif directeur présente des surfaces de contact (7a, 7a', 27a, 27b) sur le moyen de transport (2) et sur le rail (6, 6') qui peuvent respectivement être amenées en prise les unes avec les autres dans la position de suspension gauche ou droite.

53. Système de convoyeur aérien selon l'une des revendications 51 ou 52, caractérisé en ce que le dispositif directeur présente des surfaces de contact (7b, 7b' et respectivement 8b, 8b') sur le rail (6, 6') et sur le galet de roulement (3a et respectivement 3b) qui absorbe le poids de l'objet à transporter, lesquelles surfaces de contact peuvent respectivement être amenées en prise les unes avec les autres dans la position de suspension gauche ou droite.

54. Système de convoyeur aérien selon l'une des revendications 51 à 53, caractérisé en ce qu'il comprend un guidage (8a) pour le second galet de roulement (3b) dans la position de suspension droite et un guidage (8a') pour le premier galet de roulement (3a) dans la position de suspension gauche.

55. Système de convoyeur aérien selon l'une des revendications 1 à 54, caractérisé en ce que, entre le dispositif de changement (9, 50, 65) et un rail pour la position de suspension centrale, est prévu un adaptateur (71) qui comprend une voie de roulement de transition (72).

56. Système de convoyeur aérien selon l'une des revendications 3 à 55, caractérisé en ce qu'il comprend au moins une aiguille supplémentaire (43).

57. Système de convoyeur aérien selon la revendication 56, caractérisé en ce que l'aiguille (15) réalisée sous la forme d'une pièce profilée d'un seul tenant est complétée par l'aiguille supplémentaire (43) en une aiguille à trois voies.

58. Système de convoyeur aérien selon la revendication 57, caractérisé en ce que l'aiguille supplémentaire comprend une section de rail (44) avec une voie de roulement (44a) pour une position de suspension latérale, laquelle peut être rapprochée de l'aiguille (15) placée dans la voie de rails (1), et que l'aiguille (15) présente dans la nervure (18) dirigée vers la section de rail (44) un ajour (48) qui peut être ouvert et fermé par un élément obturateur (49).

59. Système de convoyeur aérien selon la revendication 58, caractérisé en ce que l'élément obturateur est conformé en languette mobile (49).

60. Système de convoyeur aérien selon l'une des revendications 1 à 59, caractérisé en ce que le moyen de transport (2) comprend un guidage (25) pour un élément d'accrochage (26) pour la fixation de l'objet à transporter, qui s'étend au moins sur l'angle de rotation du dispositif de changement (9) dans les deux positions de fonctionnement et par lequel l'élément d'accrochage (26) est guidé automatiquement, lors de la rotation de l'étrier (4), sous l'effet du poids propre de l'objet à transporter.

61. Système de convoyeur aérien selon la revendication 60, caractérisé en ce que le guidage (25) se situe sur une trajectoire circulaire autour d'un axe qui s'étend coaxialement à l'axe de rotation imaginaire (X) de l'étrier (4).

62. Système de convoyeur aérien selon la revendication 61, caractérisé en ce que le guidage (25) est conformé en fente (25a, 25b) pour l'engagement d'un étrier de guidage (26).

63. Système de convoyeur aérien selon la revendication 61, caractérisé en ce qu'il comprend respectivement une voie de roulement (62a, 62b) pour respectivement un galet de roulement (63a, 63b) disposée des deux côtés de l'étrier (4).

64. Système de convoyeur aérien selon l'une des revendications 26 à 39, caractérisé en ce que la rainure de guidage (54) présente à son extrémité postérieure dans la première direction de marche, dans le prolongement de la surface latérale (57a, 57b, 66a, 66b) de l'évidement (57, 66), une surface de dégagement (57c, 57d, 66c, 66d) qui s'étend en oblique par rapport à la direction de marche et, lorsque la rainure de guidage (54) est fermée, forme avec la surface latérale associée du déflecteur (59, 67) un espace d'entrée dans lequel s'engage la broche de guidage (60) arrivant dans la seconde position de fonctionnement, ce qui provoque la rotation de la douille cylindrique (53) de manière à ouvrir la rainure de guidage (54).

65. Système de convoyeur aérien selon l'une des revendications 1 à 64, caractérisé en ce que dans la voie de rails (1) est disposé un guidage forcé rigide qui fait tourner l'étrier (4) lors de son arrivée dans une position de suspension prédéterminée (R, M, L).

66. Moyen de transport comprenant un premier galet de roulement et un second galet de roulement reliés par un étrier ouvert, et un dispositif d'accrochage pour des objets à transporter prévu pour un système de convoyeur aérien, en particulier selon l'une des revendications 1 à 31, caractérisé en ce que le dispositif d'accrochage (26) est guidé sur un guidage (25) réalisé sur l'étrier (4).

67. Moyen de transport selon la revendication 66, caractérisé en ce que le guidage (25) s'étend sensiblement sur une partie d'une trajectoire circulaire.

68. Moyen de transport selon l'une des revendications 66 ou 67, caractérisé en ce que le guidage (25) est un guidage à glissement.

69. Moyen de transport selon la revendication 68, caractérisé en ce que le dispositif d'accrochage (26) comprend au moins une broche (26a, 26b) qui est guidée à glissement dans au moins une fente (25a, 25b) ménagée dans l'étrier (4).

70. Moyen de transport selon l'une des revendications 66 ou 67, caractérisé en ce que respectivement une voie de roulement (62a, 62b) disposée sur chacun des côtés de l'étrier (4) est prévue pour au moins l'un des galets de roulement (63a, 63b) d'une suspension roulante (64).

FIG.1

FIG. 2

FIG. 3

EP 0 234 383 B1

FIG.4

FIG.5

FIG.6

FIG.7

FIG.8

FIG.11

FIG.10

FIG.9

**FIG.12**

FIG.13

FIG. 14

FIG.15

A

2

SM1  U2  SM2  U5  SM3  SM5  U1  W1  U3  U4  W2  U8

FIG.16

B

2

SR4  SL2  U17  U18  W9  U19  U20  W10

EP 0 234 383 B1

FIG.17

FIG.18

EP 0 234 383 B1

FIG. 19

EP 0 234 383 B1

FIG. 20A

FIG.20B

## FIG. 21

## FIG.22

FIG.23

63b

60

63a

64

62b    62a

FIG. 24

FIG. 25A

FIG. 25B

FIG. 26A

FIG. 26B

FIG.27A

FIG.27B